# EUROPÄISCHE PATENTSCHRIFT

(11) **EP 3 511 447 B1**
(45) Veröffentlichungstag und Bekanntmachung des Hinweises auf die Patenterteilung: **11.03.2026**
(21) Anmeldenummer: 18151692.3
(22) Anmeldetag: 15.01.2018
(51) Int. Cl.: D01F 2/08, D01D 1/02, D01F 2/00, D01F 1/10, C08J 11/06

(54) **FUNKTIONALISIERUNG VON FREMDSTOFFEN IN LYOCELL-VERFAHREN**
FUNCTIONALIZATION OF FOREIGN SUBSTANCES IN LYOCELL METHOD
FONCTIONNALISATION DE CORPS ÉTRANGERS DANS LE PROCÉDÉ LYOCELL

(43) Veröffentlichungstag der Anmeldung: 17.07.2019
(60) Teilanmeldung: 24176982.7
(73) Patentinhaber: LENZING AKTIENGESELLSCHAFT, 4860 Lenzing (AT)
(72) Erfinder: Klaus-Nietrost, Christoph, 4840 Vöcklabruck (AT); Herchl, Richard, 4910 Ried im Innkreis (AT); Weilach, Christian, 4840 Vöcklabruck (AT)
(74) Vertreter: Dilg, Haeusler, Schindelmann Patentanwaltsgesellschaft mbH

(56) Entgegenhaltungen:
- EP-A1- 0 717 131
- WO-A1-2015/077807
- WO-A1-2016/123643
- WO-A1-98/46814
- CN-A- 102 154 722
- US-A- 4 145 533

## Beschreibung

Die Erfindung betrifft ein Verfahren zum Herstellen eines regenerierten cellulosischen Formkörpers und eine Verwendung.

Als Viskosefasern werden Chemiefasern bzw. Regeneratfasern bezeichnet, die mittels eines Viskoseverfahren genannten Nassspinnverfahrens hergestellt werden. Der Ausgangsrohstoff des Viskoseverfahrens ist Cellulose, die auf der Basis von Holz bereitgestellt wird. Aus diesem Ausgangsrohstoff Holz wird die hochreine Cellulose in Form von Chemiezellstoff gewonnen. In aufeinanderfolgenden Prozessstufen wird der Zellstoff zuerst mit Natronlauge behandelt, wodurch sich Alkalicellulose bildet. Bei einer anschließenden Umsetzung dieser Alkalicellulose mit Schwefelkohlenstoff bildet sich Cellulose-Xanthogenat. Daraus wird durch weitere Zugabe von Natronlauge die Viskose-Spinnlösung erzeugt, die durch Löcher brausenartiger Spinndüsen in ein Spinnbad gepumpt wird. Dort entsteht durch Koagulation pro Spinndüsenloch ein Viskose-Filament. Die so hergestellten Viskose-Filamente werden im Anschluss zu Viskose-Stapelfasern geschnitten.

Lyocell bezeichnet eine Cellulose aufweisende Regeneratfasergattung, die nach einem Direkt-Lösemittelverfahren hergestellt wird. Die Cellulose wird für das Lyocell-Verfahren aus dem Rohstoff Holz extrahiert. Der so gewonnene Zellstoff kann anschließend in N-Methylmorpholin-N-oxid (NMMO), einem Lösungsmittel, durch Wasserentzug ohne chemische Modifizierung gelöst, filtriert und anschließend durch Spinndüsen gepresst werden. Die so geformten Filamente werden nach Passieren eines Luftspaltes in einem Bad mit wässriger NMMO-Lösung ausgefällt, und anschließend zu Stapelfasern geschnitten.

Das rückstandsfreie Entfernen von Fremdstoffen ist sowohl im Lyocell-Verfahren als auch im Viskoseverfahren aufwendig.

EP 0 717 131 A1 offenbart ein Verfahren zum Recycling von gefärbten, cellulosischen Abfallprodukten. Hierbei werden Alttextilien verwendet, welche Cellulose-Material aufweisen, welches wiederum mit Reaktivfarbstoffen gefärbt ist. Die Textilien können zunächst mechanisch zerkleinert werden und eine farbliche Vorsortierung kann stattfinden. Das Ausgangsmaterial wird dann in Alkalilauge suspendiert, um eine Alkalicellulose zu erhalten, welche dann zunächst 30 Minuten bei 30° bis 80° C reift. Danach wird die Alkalicellulose mit Schwefelkohlenstoff zu Xanthogenat umgesetzt. Das entstandene Xanthogenat wird in verdünnte Alkalilauge eingetragen, zu einer homogenen Masse verrührt, und gemäß einem Viskoseverfahren in ein schwefelsaures Fällbad extrudiert, um Viskosefasern zu spinnen.

Es ist eine Aufgabe der vorliegenden Erfindung, in effizienter Weise Celluloseprodukte mit flexibel einstellbarer Funktionalität herzustellen.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Ausführungsbeispiel der vorliegenden Erfindung ist ein Verfahren zum Herstellen eines regenerierten cellulosischen Formkörpers geschaffen, wobei das Verfahren aufweist:
i) Zuführen eines Ausgangsstoffs, der Cellulose und mindestens einen Fremdstoff aufweist;
ii) Überführen von mindestens einem Teil des Ausgangsstoffs mit mindestens einem Teil des mindestens einen Fremdstoffs in eine Spinnmasse, die zusätzlich ein Lösungsmittel zum Lösen mindestens eines Teils der Cellulose des Ausgangsstoffs in dem Lösungsmittel enthält;
iii) Einstellen einer gewünschten Restkonzentration des mindestens einen Fremdstoffs in dem Formkörper zum Erzielen einer Funktion des mindestens einen Fremdstoffs in dem Formkörper,
   wobei das Einstellen ein teilweises Entfernen von mindestens einem des mindestens einen Fremdstoffs durch Abtrennen eines Teils des mindestens einen Fremdstoffs von der Cellulose des Ausgangsstoffs aufweist;
iv) Extrudieren der Spinnmasse zu dem Formkörper und nachfolgendes Ausfällen in einem Spinnbad, wodurch der Formkörper erhalten wird, wobei der Formkörper Cellulose und mindestens einen Teil des mindestens einen Fremdstoffs aufweist.

Hierbei hat der in dem Formkörper befindliche mindestens eine Fremdstoff einen Anteil von mindestens 0,01 Gewichtsprozent bezogen auf das Gesamtgewicht des Formkörpers.

Gemäß einem Ausführungsbeispiel der vorliegenden Erfindung ist eine Verwendung beschrieben eines Cellulose und mindestens einen Fremdstoff aufweisenden Ausgangsstoffs, in welchem die Cellulose und der mindestens eine Fremdstoff beim Zuführen in einem gemeinsamen Festkörperverbund vorliegen, zum Herstellen eines regenerierten cellulosischen Formkörpers mittels des Lyocell-Verfahrens, wobei der mindestens eine Fremdstoff vor einem Lösen von der Cellulose des Ausgangsstoffs teilweise entfernt wird, wobei der Formkörper Cellulose und mindestens einen Teil des mindestens einen Fremdstoffs enthält, und wobei der mindestens eine Fremdstoff in dem Formkörper verwendet wird, um den Formkörper mit einer Funktion des mindestens einen Fremdstoffs auszustatten. Hierbei hat der in dem Formkörper befindliche mindestens eine Fremdstoff einen Anteil von mindestens 0,01 Gewichtsprozent bezogen auf das Gesamtgewicht des Formkörpers.

Im Rahmen dieser Anmeldung kann unter dem Begriff "Cellulose" insbesondere eine organische Verbindung verstanden werden, die Bestandteil pflanzlicher Zellwände ist oder synthetisch hergestellt werden kann. Cellulose ist ein Polysaccharid (d.h. ein Vielfachzucker). Cellulose ist unverzweigt und weist typischerweise mehrere hundert bis zehntausende β-D-Glucose-Moleküle (β-1,4-glycosidische Bindung) bzw. Cellobiose-Einheiten auf. Aus Cellulosemolekülen werden von Pflanzen kontrolliert Cellulosefasern aufgebaut. Mit einem technischen Prozess können Cellulosemoleküle unter Bildung von Regeneratfasern zusammengelagert werden, zum Beispiel als reißfeste Fasern.

Im Rahmen dieser Anmeldung kann unter dem Begriff "Formkörper" insbesondere ein zwei- oder dreidimensionaler geometrischer Körper verstanden werden, der ein Resultat eines Verfahrens zum Herstellen bzw. Wiedergewinnen von Cellulose ist. Insbesondere kann unter einem Formkörper ein zwei- oder dreidimensionales Objekt verstanden werden, das Cellulose aufweist oder daraus besteht und aus gelöstem Zellstoff hergestellt wird. Formkörper können insbesondere Lyocell-Formkörper, Viskose-Formkörper oder Modal-Formkörper sein. Typische Formkörper sind Filamente, Fasern, Schwämme und/oder Filme. Grundsätzlich eignen sich alle Arten von Celluloseformkörpern für Ausführungsbeispiele der Erfindung. Dabei sind als Fasern sowohl Endlosfilamente als auch geschnittene Stapelfasern mit herkömmlichen Abmessungen (zum Beispiel 38 mm Länge) und Kurzfasern zu verstehen. Zur Herstellung von Fasern kommen dabei sowohl Verfahren mit Abzugseinrichtungen nach einer oder mehreren Extrusionsdüsen als auch andere Verfahren, wie insbesondere Melt-Blowing-Verfahren, in Frage. Alternativ zu Fasern kann als Formkörper auch eine Cellulose aufweisende Folie hergestellt werden, d.h. ein flächiger und im Wesentlichen homogener Film mit oder aus Cellulose. Folien können insbesondere dadurch hergestellt werden, dass durch Einstellung der Prozessparameter eines Lyocell-Verfahrens ein Koagulieren zumindest teilweise erst nach Auftreffen der Filamente auf einer Aufnahmefläche ausgelöst wird. Unter Folien können flächige Celluloseformkörper verstanden werden, wobei die Dicke dieser Folien einstellbar ist (zum Beispiel durch Auswahl einer Anzahl seriell angeordneter Düsenbalken). Andere Ausführungsformen eines Formkörpers sind ein Gewebe und ein Vlies aus Cellulosefilamenten bzw. aus Cellulosefasern, insbesondere ein Spinnvlies aus integral miteinander verschmolzenen ("merging") im Wesentlichen kontinuierlichen Cellulosefilamenten ("melt blown"). Hierbei kann unter einem Gewebe insbesondere ein textiles Flächengebilde aus mindestens zwei (vorzugsweise rechtwinklig oder nahezu rechtwinklig) verkreuzten Fadensystemen (oder Fasersystemen) verstanden werden, wobei Fäden (oder Fasern) in Längsrichtung als Kettfäden und Fäden (oder Fasern) in Querrichtung als Schussfäden bezeichnet werden können. Ein Vlies oder Nonwoven kann als ungeordnetes (insbesondere in Wirrlage vorliegendes) Gebilde aus Filamenten oder Fasern oder geschnittenen Garnen begrenzter Länge bezeichnet werden, die zu einer Faserschicht oder einem Faserflor zusammengefügt und (insbesondere reibschlüssig) miteinander verbunden sind. Ein Formkörper kann auch in der Gestalt einer Kugel geschaffen werden. Als Formkörper können auch Cellulose aufweisende Partikel, wie insbesondere Beads (d.h. ein Granulat bzw. Kügelchen) oder Flakes, bereitgestellt werden, die in dieser Form weiterverarbeitet werden können. Mögliche Celluloseformkörper sind also auch partikuläre Strukturen wie Granulat, sphärische Pulver oder Fibride. Eine Formgebung eines Formkörpers erfolgt bevorzugt durch die Extrusion einer cellulosehaltigen Spinnlösung durch eine Extrusionsdüse, da auf diese Weise große Mengen der Celluloseformkörper mit sehr einheitlicher Form hergestellt werden können. Ein weiterer möglicher Celluloseformkörper ist ein Schwamm oder allgemeiner ein poröser Formkörper. Die genannten Formkörper können gemäß exemplarischen Ausführungsbeispielen zum Beispiel zur Herstellung von Garnen, Textilien, Gelen oder Verbundwerkstoffen verwendet werden.

Im Rahmen dieser Anmeldung kann unter dem Begriff "Lyocell-Verfahren" insbesondere ein Verfahren zum Herstellen von Cellulose nach einem Direkt-Lösemittelverfahren verstanden werden. Die Cellulose kann für das Lyocell-Verfahren aus einem Ausgangsstoff gewonnen werden, der diese Cellulose enthält. Der Ausgangsstoff kann bei dem Lyocell-Verfahren in einem geeigneten Lösungsmittel (insbesondere aufweisend tertiäre Aminoxide wie zum Beispiel N-Methylmorpholin-N-oxid (NMMO) und/oder ionische Flüssigkeiten, d.h. niedrig schmelzende Salze, die aus Kationen und Anionen aufgebaut sind) gelöst werden. Das Lösen kann insbesondere durch Wasserentzug und/oder ohne chemische Modifizierung erfolgen. Die erhaltene Lösung, die auch als Dope oder Spinnlösung bezeichnet werden kann, kann bei dem Lyocell-Verfahren anschließend durch eine oder mehrere Spinndüsen gepresst werden. Dadurch gebildete Filamente können während und/oder nach ihres freien oder gesteuerten Fallens durch einen Luftspalt in einem wasserhaltigen Bad (insbesondere in einem Bad mit wässriger NMMO-Lösung) und/oder in dem Luftspalt befindliche Luftfeuchtigkeit ausgefällt werden.

Im Rahmen dieser Anmeldung kann unter dem Begriff "Viskoseverfahren" insbesondere ein Verfahren zum Herstellen von Cellulose nach einem Nassspinnverfahren verstanden werden. Die Cellulose kann für das Viskoseverfahren aus einem Ausgangsstoff (insbesondere Holz oder ein Holzzellstoff) gewonnen werden, der diese Cellulose enthält. In aufeinanderfolgenden Prozessstufen kann bei dem Viskoseverfahren der Ausgangsstoff zuerst mit einer Base (zum Beispiel mit Natronlauge) behandelt werden, wodurch sich Alkalicellulose bildet. Bei einer anschließenden Umsetzung dieser Alkalicellulose mit Schwefelkohlenstoff bildet sich Cellulose-Xanthogenat. Daraus kann durch weitere Zugabe einer Base (insbesondere von Natronlauge) eine Viskose-Spinnlösung erzeugt werden, die durch eine oder mehrere Spinndüsen gepresst werden kann. In einem Spinnbad entstehen durch Koagulation Viskose-Filamente.

Im Rahmen der vorliegenden Anmeldung wird unter dem Begriff "Fremdstoff" insbesondere mindestens ein nicht-cellulosisches Material verstanden, das zusätzlich zu der Cellulose in dem hergestellten Formkörper verbleibt (insbesondere angelagert an und/oder eingebettet in Cellulosefasern und/oder zwischen Cellulosefasern angeordnet). Hierbei kann es sich um eine solche Konzentration oder Menge von Fremdstoffen handeln, die oberhalb eines - wie von einem Fachmann verstanden werden wird - unvermeidlichen Verbleibens von minimalen Spuren nicht-cellulosischer Stoffe in dem Formkörper liegt. Bei dem einen oder den mehreren Fremdstoffen kann es sich insbesondere mindestens teilweise um nicht-cellulosische Fasern handeln, wie zum Beispiel Fasern synthetischen Kunststoffs (beispielsweise aus Polyester und/oder Elastan), die in dem Formkörper verbleiben. Der mindestens eine Fremdstoff, der in dem Formkörper verbleibt, kann alternativ oder ergänzend andere, bereits in dem Ausgangsstoff zum Herstellen des Formkörpers enthaltene, Konstituenten enthalten, zum Beispiel Reste von Knöpfen oder Nähten oder aus dem Ausgangsstoff stammende Farbstoffe. Hierbei kann insbesondere die Konzentration bzw. Menge der in dem Formkörper verbleibenden ein oder mehreren Fremdstoffen höher als ein Wert gewählt werden, der durch Verfahren zum Entfernen solcher Fremdstoffe während Durchführens des Herstellungsverfahrens zum Herstellen des Formkörpers unvermeidlich als Spuren in dem Formkörper verbleiben. Anders ausgedrückt können die aus dem Ausgangsstoff stammenden und in dem Formkörper verbleibenden ein oder mehreren Fremdstoffe mit einer bewusst gegenüber unvermeidlichen Resten erhöhten Menge in dem Formkörper belassen werden. Die Menge der in dem Formkörper verbleibenden ein oder mehreren Fremdstoffe kann so gewählt werden, dass der in dem Formkörper verbleibende mindestens eine Fremdstoff dort in einer solchen Konzentration bzw. Menge vorliegt, dass er bei der Verwendung des Formkörpers oder eines daraus hergestellten Produkts funktionell in Erscheinung tritt, mithin eine nicht ohne den jeweiligen Fremdstoff erreichbare Funktion des Formkörpers oder daraus hergestellten Produkts bereitstellt.

Gemäß einem exemplarischen Ausführungsbeispiel der Erfindung wird ein Ausgangsstoff mittels des Lyocell-Verfahrens in einen Formkörper umgewandelt, der Cellulose aufweist. Darüber hinaus wird während dieses Herstellungsverfahrens aber bewusst mindestens ein Teil von einem oder mehreren solcher Fremdstoffe in dem Formkörper beibehalten, welcher Formkörper mindestens einen (vorzugsweise bereits in dem Ausgangsstoff vorhandenen) Fremdstoff enthält. Während herkömmlich eine Entfernung von Fremdstoffen bis zum technisch absolut erreichbaren Minimum angestrebt wurde, vollzieht ein exemplarisches Ausführungsbeispiel der Erfindung diesbezüglich einen Paradigmenwechsel und belässt bewusst eine gewisse Konzentration mindestens eines Fremdstoffs in dem fertig hergestellten Formkörper oder einem daraus mittels Weiterverarbeitung hergestellten Produkts, um mit diesem mindestens einen Fremdstoff eine zugehörige Funktion in dem Formkörper bzw. Produkt zu beeinflussen, hervorzurufen oder zu bewirken. Anders ausgedrückt wird die Verfahrensführung gemäß einem exemplarischen Ausführungsbeispiel mit Vorteil so angepasst, dass eine ausreichende Restkonzentration (oberhalb einer technisch erreichbaren Minimalkonzentration) des mindestens einen Fremdstoffs in dem Formkörper oder einem daraus hergestellten Produkt verbleibt. Damit kann eine Zusatzfunktion des Formkörpers oder Produkts erreicht werden, die ohne den Fremdstoff nicht oder nicht in diesem Ausmaß erreicht würde. Auf diese Weise kann eine einfache Verfahrensführung mit einer verbesserten Funktionalität eines hergestellten Cellulose-Formkörpers kombiniert werden. Das vereinfachte Herstellungsverfahren resultiert daraus, dass keine aufwendigen technischen Maßnahmen getroffen werden müssen, die Fremdstoffkonzentration auf ein technisch absolut erreichbares Minimum zu bringen. Die erhöhte Funktionalität kann dadurch erreicht werden, dass ein oder mehrere Fremdstoffe in dem hergestellten Formkörper dem Formkörper oder einem daraus hergestellten Produkt eine zusätzliche Funktion verleihen oder eine solche Funktion verstärken, die ohne die ausreichend hohe Konzentration des Fremdstoffs nicht erreichbar wäre. Exemplarische Ausführungsbeispiele erweitern zudem die Einsatzmöglichkeit von Ausgangsstoffen für das Lyocell-Verfahren, indem anders als bei herkömmlichen Ansätzen nun auch solche Ausgangsstoffe für das Lyocell-Verfahren in Betracht gezogen werden können, die eine erhebliche Menge an nicht-cellulosischen Fremdstoffen aufweisen. Zum Beispiel können auch Post-Consumer-Altkleider zum Einsatz kommen, die bereits von einem Verbraucher verwendet worden sind und zusätzlich zu Cellulose eine Mehrzahl von Fremdstoffen in hoher Konzentration enthalten können. Gemäß einem Ausführungsbeispiel ist es entbehrlich, die gesamte hohe Menge an Fremdstoffen aus einem solchen Ausgangsstoff zu entfernen, da gemäß einem Ausführungsbeispiel zumindest ein Teil solcher Fremdstoffe zur Funktionalisierung des hergestellten Formkörpers in diesem belassen werden kann. Dadurch wird die Wiederverwertbarkeit von cellulosischen Abfällen verbessert und ein ressourcenschonender und nachhaltiger Umgang mit wiederverwertbaren Ausgangsstoffen verbessert.

Im Weiteren werden zusätzliche Ausführungsbeispiele des Verfahrens und der Verwendung beschrieben.

Gemäß einem Ausführungsbeispiel enthält das Spinnbad insbesondere eine Mischung aus Wasser und Lösungsmittel. Die extrudierte Spinnmasse koaguliert in dem Spinnbad, da der Gehalt an Lösungsmittel geringer ist und somit die Cellulose aus dem engen Löslichkeitsfenster im Lösemittel fällt. Der Formkörper kann zum Beispiel eine Faser, eine Folie oder ein Micro-Bead sein. Aus dem Formkörper kann dann ein Produkt hergestellt werden, zum Beispiel ein Garn, ein Stoff, etc.

Gemäß einem Ausführungsbeispiel kann das Ausfällen durch ein Verdünnen des in der Spinnmasse gelösten Ausgangsstoffs durch ein wässriges Milieu in dem Spinnbad bewirkt werden. Insbesondere kann das Spinnbad ein Wasserbad sein, weiter insbesondere im Wesentlichen bestehend aus Wasser oder einer Mischung aus Wasser und Lösungsmittel (insbesondere NMMO). Anschaulich wird im Lyocell-Verfahren durch das Wasser (insbesondere ein flüssiges Bad mit Wasser und optional einem Lösungsmittel) die Konzentration des Lösungsmittels, das die Cellulose zum Lösen gebracht hat, so stark reduziert, dass die erhaltene verdünnte Lösung unter die Löslichkeitsgrenze von Cellulose absinkt und die Cellulose dadurch ausfällt bzw. präzipitiert. Das Koagulationsmedium (d.h. insbesondere das Wasserbad) kann im Wesentlichen reines Wasser sein oder kann mit einem Lösungsmittel versehen sein.

Gemäß einem Ausführungsbeispiel kann das Verfahren ein höchstens teilweises bzw. genau teilweises Entfernen (d.h. ein Teil wird entfernt, und ein anderer Teil verbleibt) von mindestens einem des mindestens einen Fremdstoffs aufweisen. Genauer gesagt kann das Verfahren ein nur genau teilweises Entfernen von mindestens einem des mindestens einen Fremdstoffs durch Abtrennen von nur genau einem Teil des mindestens einen Fremdstoffs von der Cellulose des Ausgangsstoffs aufweisen (insbesondere vor dem Ausfällen, weiter insbesondere vor dem Lösen). Gemäß einem solchen Ausführungsbeispiel wird die Verfahrensführung während des Lyocell-Verfahrens so eingestellt, dass bewusst nicht die gesamte entfernbare Menge von Fremdstoff aus dem Ausgangsstoff entfernt wird, um daraus cellulosische Formkörper herzustellen, sondern indem stattdessen eine Einstellung der Prozessparameter einer Herstellungsapparatur derart vorgenommen wird, dass mehr als nur unvermeidliche Spuren von Fremdstoffen des Ausgangsstoffs in dem hergestellten Formkörper verbleiben. Zum Beispiel kann auf bestimmte Prozeduren zum Entfernen von Fremdstoffen ganz oder teilweise verzichtet werden, zum Beispiel das Herstellungsverfahren ohne Bleichschritt zum Entfernen von Farbstoffen durchgeführt werden. Ferner ist es möglich, einen Filter, der eine Lyocell-Spinnlösung vor dem Verspinnen filtert und dadurch teilweise von Fremdstoffen befreit, so auszugestalten (insbesondere Öffnungen in dem Filter so zu dimensionieren), dass eine bestimmte Menge von Fremdstoffen (zum Beispiel Fremdstoffe mit einer Größe unterhalb einer Grenzgröße, bis zu welcher ein Filter Partikel von Spinndüsen zurückhält) in einer Lyocell-Spinnlösung und folglich in dem fertig hergestellten Formkörper verbleibt. Darüber hinaus ist es zum Beispiel möglich, auf die Durchführung von Separationsschritten zum Abtrennen bestimmter Fremdstoffe entweder ganz zu verzichten oder solche Separationsschritte in begrenzter oder reduzierter Weise durchzuführen. Auf diese Weise verbleibt ein oder verbleiben mehrere Fremdstoffe mit einer einstellbaren Sollkonzentration (insbesondere oberhalb einer unvermeidbaren Minimalkonzentration) in dem hergestellten Formkörper.

Gemäß einem Ausführungsbeispiel kann der Ausgangsstoff eine wiederzuverwertende Cellulosequelle aufweisen oder daraus bestehen, insbesondere ganz oder teilweise aus Resten aus einer Kleidungsherstellung und/oder aus Altkleidern gebildet sein. Im Rahmen dieser Anmeldung kann unter dem Begriff "Cellulosequelle" insbesondere ein Medium (insbesondere ein Festkörpermedium) verstanden werden, das als Basis zum Herstellen eines Cellulose aufweisenden Formkörpers während eines entsprechenden Herstellungsverfahrens das hierfür verwendete Cellulosematerial bereitstellt. Ein Beispiel ist Holz bzw. Holzzellstoff. Da gemäß einem exemplarischen Ausführungsbeispiel bestimmte Mengen mindestens eines Fremdstoffs in dem hergestellten Formkörper bewusst zur Bereitstellung einer Zusatzfunktion des hergestellten Formkörpers eingesetzt werden, kann das Spektrum von Ausgangsstoffen für das Lyocell-Verfahren erhöht werden. Es können nämlich auch solche Ausgangsstoffe Eingang in das Lyocell-Verfahren finden, die nicht erstmals einer natürlichen Ressource wie Holz entnommen werden, sondern einem bereits gebrauchten Produkt entstammen. Besonders vorteilhaft ist in diesem Zusammenhang die Verwendung von Post-Consumer-Altkleidern nach Verwendung durch einen Verbraucher, da solche Altkleider ein großes Reservoir an wiederzuverwertender Cellulose einerseits und funktionalisierbaren Fremdstoffen andererseits (zum Beispiel synthetische Kunststoffe wie Polyester oder Elastan, Farbstoffe etc.) aufweist.

Im Rahmen dieser Anmeldung kann unter dem Begriff "Reste aus einer Kleidungsherstellung" insbesondere Ausschuss und/oder Verschnitt eines Cellulose aufweisenden oder daraus bestehenden Textils oder Garnes verstanden werden, wobei diese Reste während eines Verfahrens zum Herstellen von Kleidung anfallen. Beim Herstellen von Kleidung wird zum Beispiel ein Cellulose aufweisendes Textil als Ausgangsstoff hergestellt, aus dem dann flächige Teile (zum Beispiel in Form einer T-Shirt-Hälfte) ausgeschnitten werden. Übrig bleiben Reste, die gemäß einem exemplarischen Ausführungsbeispiel wieder einem Verfahren zum Herstellen eines Cellulose aufweisenden Formkörpers zugeführt werden können. Bei Resten aus einer Kleidungsherstellung kann es sich also um einen Cellulose aufweisenden oder daraus bestehenden Ausgangsstoff handeln, der zum Wiedergewinnen von Cellulose verwendet werden kann, bevor ein Verbraucher die Reste als Kleidung oder in anderer Weise verwendet hat. Reste aus einer Kleidungsherstellung können insbesondere aus im Wesentlichen reiner Cellulose gebildet sein, insbesondere ohne separate und nicht Cellulose aufweisende Fremdkörper (wie zum Beispiel Knöpfe, Textildruck oder Nähte).

Im Rahmen dieser Anmeldung können unter dem Begriff "Altkleider" insbesondere Cellulose aufweisende Kleidungsstücke verstanden werden, die bei Rückgewinnung zumindest eines Teils der Cellulose bereits von einem Verbraucher benutzt (insbesondere getragen) worden sind. Bei Altkleidern kann es sich also um einen Cellulose aufweisenden Ausgangsstoff handeln, der erhebliche Mengen von Fremdstoffen aufweisen kann (aber nicht muss) und zum Wiedergewinnen von Cellulose verwendet werden kann, nachdem ein Verbraucher die Altkleider als Kleidung oder in anderer Weise verwendet hat. Altkleider können insbesondere aus einer Mischung aus Cellulose und einem oder mehreren Fremdstoffen gebildet sein, insbesondere aufweisend (insbesondere bei Kleidungsstücken häufig verwendeten) synthetischen Kunststoff (wie zum Beispiel Polyester und/oder Elastan) und/oder separate und nicht Cellulose aufweisende Fremdkörper (wie zum Beispiel Knöpfe, Textildruck oder Nähte). Unter Polyester werden insbesondere Polymere mit Esterfunktionen (R-[-CO-O-]-R) in ihrer Hauptkette verstanden. Zu Polyestern gehören Polycarbonate und Polyethylenterephthalat. Unter Elastan wird insbesondere eine dehnbare Chemiefaser mit hoher Elastizität verstanden. Ein Elastan zugrundeliegendes Blockcopolymer kann einen Massenanteil von mindestens 85 % Polyurethan enthalten.

Gemäß einem Ausführungsbeispiel kann der mindestens eine Fremdstoff mindestens einen aus einer Gruppe aufweisen, die besteht aus einem Farbstoff, einem optischen Aufheller, einem Mattierungsmittel (insbesondere TiO₂) und einem antimikrobiellen Stoff (insbesondere Zinkoxid). Wird ein solcher Farbstoff in dem Formkörper beibehalten, welcher Farbstoff bereits in dem Ausgangsstoff enthalten war, kann eine zusätzliche Färbung des hergestellten Formkörpers entbehrlich sein. Ein optischer Aufheller, der bereits in dem Ausgangsstoff enthalten war, kann ebenfalls in dem hergestellten Formkörper wiederverwendet werden, so dass der Recyclinggrad auch diesbezüglich erhöht werden kann. Ein antimikrobieller Stoff wie Zinkoxid kann ebenfalls aus dem Ausgangsstoff in den fertig hergestellten Formkörper übernommen werden und kann dort ein unerwünschtes Wachstum von Bakterien und dergleichen hemmen oder sogar eliminieren. Dies ist insbesondere für die Verwendung der hergestellten Formkörper für solche Produkte vorteilhaft, die in Kontakt mit dem Körper eines Benutzers gelangen können (zum Beispiel wiederverwertete Kleidungsstücke oder Medizinprodukte sowie Kosmetikartikel).

Gemäß einem Ausführungsbeispiel kann der mindestens eine Fremdstoff Elastan aufweisen, das während des Lösens der Cellulose ebenfalls mindestens teilweise gelöst wird. Elastan findet in vielen Textilien, insbesondere Kleidern, weiter insbesondere Altkleidern, Verwendung und kann als Fremdstoff bewusst in dem Cellulose aufweisenden Formkörper belassen werden. Es hat sich herausgestellt, dass Elastan in einem recycelten Cellulose-Formkörper in keiner Weise stört und somit nicht aufwendig bis zu einer maximal erreichbaren Grenze aus dem Ausgangsstoff entfernt werden muss, wenn ein Formkörper hergestellt wird. Es ist sogar möglich, mit dem Belassen von Elastan in einem cellulosischen Formkörper Letzterem eine gewisse Elastizität zu verleihen. Auf diese Weise können auch Formkörper mit elastischen Eigenschaften hergestellt werden.

Gemäß einem Ausführungsbeispiel kann der mindestens eine Fremdstoff Polyester aufweisen, das mindestens teilweise in dem Ausgangsstoff belassen wird, wenn dieser gelöst, insbesondere ausgefällt, wird. Polyester ist ein Fremdstoff, der in Post-Consumer-Altkleidern häufig zu finden ist. Gemäß einem exemplarischen Ausführungsbeispiel kann mindestens ein Teil dieses Polyesters in dem hergestellten Cellulose-Formkörper verbleiben. Anschaulich kann ein solcher Rest von Polyester in dem Formkörper ähnlich wie ein Heißschmelzkleber fungieren und ein Fasergewebe bzw. ein Faservlies aus Cellulose mechanisch stärken. Dadurch kann durch das mindestens teilweise Belassen von Polyester in dem Celluloseformkörper ein mechanisch besonders robustes Cellulosematerial geschaffen werden, das dadurch auch mit thermoplastischen Eigenschaften versehen werden kann. Gemäß einem solchen Ausführungsbeispiel ist die durch den Fremdstoff bereitgestellte Zusatzfunktion also in einer erhöhten mechanischen Robustheit bzw. Stabilität des hergestellten Formkörpers zu sehen.

Gemäß einem Ausführungsbeispiel kann das Verfahren ein mindestens teilweises Entfernen nicht-cellulosischer Fasern aus dem Ausgangsstoff vor dem Ausfällen, insbesondere vor dem Lösen, aufweisen. Solche Fasern können entweder ganz entfernt oder teilweise in dem Formkörper belassen werden. Insbesondere wiederzuverwertende Post-Consumer-Altkleider weisen häufig eine erhebliche Menge an Fasern auf, die nicht aus Cellulose gebildet sind. Beispiele hierfür sind Polyesterfasern. Indem gemäß einem exemplarischen Ausführungsbeispiel solche Fasern während des Verfahrens zum Herstellen von Cellulose-Formkörpern (insbesondere Cellulose-Fasern) als Mischfasern zusätzlich zu den Cellulosefasern beibehalten werden, können Abtrennverfahren ganz oder teilweise weggelassen werden und können Formkörper mit Mischeigenschaften aus Cellulosefasern und synthetischen Fasern erhalten werden. Mit Vorteil können solche nicht-cellulosischen Fasern teilweise beim Verfahren zum Herstellen der Formkörper entfernt und zu einem anderen Teil darin belassen werden. Durch diese Maßnahme kann die Funktionalität des in einer einstellbaren Menge in dem Formkörper verbleibenden mindestens einen Fremdstoffs benutzerseitig eingestellt werden.

Gemäß einem Ausführungsbeispiel kann das Verfahren ein mindestens teilweises, insbesondere ein vollständiges, Entfernen von Metallen aus dem Ausgangsstoff, aufweisen. In dem Ausgangsstoff etwaig enthaltene Metalle können aus diesem mit Vorteil ganz oder teilweise entfernt werden, zum Beispiel um allergische Reaktionen bei Inkontaktkommen mit der Haut eines Benutzers zu vermeiden (zum Beispiel Nickel). Alternativ kann ein oder können mehrere Metalle aber auch in dem Formkörper belassen werden. So kann zum Beispiel Silber aus dem Ausgangsstoff eine antimikrobielle Wirkung in dem wiederverwerteten Formkörper entfalten. Um das Ausmaß der Funktionalität des in dem Formkörper verbleibenden mindestens einen Fremdstoffs zu justieren, kann ein Teil von Metallen als Fremdstoffe aus dem Ausgangsmaterial entfernt werden.

Gemäß einem Ausführungsbeispiel kann bei dem Verfahren der Cellulose aufweisende Formkörper ohne Durchführung einer Bleichprozedur hergestellt werden. Durch das Verzichten auf die Durchführung einer Bleichprozedur können Farbstoffe in einem Ausgangsstoff ebenfalls dem Wiederverwertungsprozess zugeführt werden und eine Recyclingquote dadurch erhöht werden. Dies verbessert die Nachhaltigkeit und die Ressourceneffizienz während der Durchführung des Lyocell-Verfahrens. Wenn ein Bleichverfahren weggelassen wird, kann mit Vorteil optional ein Vorsortieren des Ausgangsstoffs in verschiedene Farbgruppen erfolgen.

Gemäß einem Ausführungsbeispiel können vor dem Lösen Ausgangsstoffe in mehrere Farbgruppen farblich vorsortiert werden und (zum Beispiel in einer jeweiligen Charge) jeweils nur Ausgangsstoff einer gemeinsamen Farbgruppe gelöst werden. Durch das Vorsortieren des Ausgangsstoffs, insbesondere von Altkleidern und/oder Resten aus der Kleidungsherstellung, kann ein jeweiliger einer jeweiligen Farbgruppe zugehöriger Ausgangsstoff unter mindestens teilweiser Beibehaltung seiner Farbstoffe dem Lyocell-Verfahren zugeführt und in dem hergestellten Formkörper belassen werden. So kann zum Beispiel eine Sortierung von Ausgangsstoff in die Farbgruppen rot, grün, blau, gelb, schwarz, weiß und sonstige Restfarben vorgenommen werden. Als Ergebnis dieser Vorsortierung wird der erhaltene Formkörper nicht in einem indifferenten Grau- oder Braunton erhalten, sondern kann einen Farbton aufweisen, der dem vorsortierten Farbton entspricht oder mindestens ähnelt. Ein Vorsortieren eines Ausgangsstoffs nach Farbgruppen kann vollautomatisch, zum Beispiel basierend auf einer optischen Erkennung des zugeführten Ausgangsstoffs und einer entsprechend vorgenommenen maschinengesteuerten Sortierung, bewerkstelligt werden. Als Ergebnis des Vorsortierens sind die in dem Ausgangsstoff enthaltenen Farbstoffe nicht länger als störende Fremdstoffe anzusehen, sondern können dem hergestellten Formkörper die Funktion einer jeweiligen Farbgebung verleihen.

Der in dem Formkörper oder der Vorform befindliche Anteil des mindestens einen Fremdstoffs (insbesondere eine Gesamtmenge von nicht-cellulosischen Fremdstoffen in dem Formkörper oder der Vorform) beträgt mindestens 0,01 Gewichtsprozent, insbesondere mindestens 0,1 Gewichtsprozent, weiter insbesondere mindestens 1 Gewichtsprozent, noch weiter insbesondere mindestens 10 Gewichtsprozent, jeweils bezogen auf das Gesamtgewicht des Formkörpers oder der Vorform. Die genannten Bereiche von Gewichtsprozenten eines oder mehrerer Fremdstoffe in dem Formkörper können für jeden der hierin beschriebenen Fremdstoffe (insbesondere einen Farbstoff, einen synthetischen Kunststoff wie Polyester oder Elastan, eine antimikrobielle Substanz wie Zinkoxid oder Silber, einen optischen Aufheller, nicht-cellulosische Fremdfasern etc.) alleine oder gemeinsam in dem Formkörper belassen werden. Mit den genannten Werten ist eine ausreichende Funktionalisierung des Formkörpers mit dem einen oder mehreren Fremdstoffen ermöglicht.

Insbesondere kann ein in dem Formkörper oder der Vorform befindlicher Anteil von Polyester als aus dem Ausgangsstoff stammender Fremdstoff mindestens 0,001 Gewichtsprozent, insbesondere mindestens 0,01 Gewichtsprozent, weiter insbesondere mindestens 1 Gewichtsprozent, betragen, bezogen auf das Gesamtgewicht des Formkörpers oder der Vorform. Alternativ oder ergänzend kann ein in dem Formkörper oder der Vorform befindlicher, aus dem Ausgangsstoff stammender Anteil von Elastan als Fremdstoff mindestens 0,001 Gewichtsprozent, insbesondere mindestens 0,01 Gewichtsprozent, weiter insbesondere mindestens 1 Gewichtsprozent, betragen, bezogen auf das Gesamtgewicht des Formkörpers oder der Vorform. Alternativ oder ergänzend kann ein in dem Formkörper oder der Vorform befindlicher, aus dem Ausgangsstoff stammender Anteil von Farbstoff (insbesondere Indigo-Farbstoff von Denim-Stoffen) als Fremdstoff mindestens 0,001 Gewichtsprozent, insbesondere mindestens 0,01 Gewichtsprozent, weiter insbesondere mindestens 1 Gewichtsprozent, betragen, bezogen auf das Gesamtgewicht des Formkörpers oder der Vorform. Alternativ oder ergänzend kann ein in dem Formkörper oder der Vorform befindlicher, aus dem Ausgangsstoff stammender Anteil von Metalloxid als Fremdstoff mindestens 0,001 Gewichtsprozent, insbesondere mindestens 0,01 Gewichtsprozent, weiter insbesondere mindestens 1 Gewichtsprozent, betragen, bezogen auf das Gesamtgewicht des Formkörpers oder der Vorform. Alternativ oder ergänzend kann ein in dem Formkörper oder der Vorform befindlicher, aus dem Ausgangsstoff stammender Anteil von einer antimikrobiellen Substanz als Fremdstoff mindestens 0,001 Gewichtsprozent, insbesondere mindestens 0,01 Gewichtsprozent, weiter insbesondere mindestens 1 Gewichtsprozent, betragen, bezogen auf das Gesamtgewicht des Formkörpers oder der Vorform. Lyocell-Fasern können gemäß einem exemplarischen Ausführungsbeispiel nach dem Spinnen zum Beispiel 0,004 Gewichtsprozent bis 0,01 Gewichtsprozent oder mehr an Verunreinigungen aufweisen.

Gemäß einem Ausführungsbeispiel kann das Verfahren ein Zerkleinern, insbesondere ein mechanisches Zerkleinern, weiter insbesondere ein Schreddern, des Ausgangsstoffs vor dem Lösen des Ausgangsstoffs in dem Lösungsmittel aufweisen. Zum Beispiel kann durch das Zerkleinern eine Verringerung der Größe des Ausgangsstoffs auf Fasergröße erfolgen. Insbesondere ein so vorbereiteter Ausgangsstoff kann auch ohne chemische Vorbehandlung direkt in Lösung überführt werden, um eine zähviskose Spinnmasse zu erzeugen.

Gemäß einem Ausführungsbeispiel kann der Ausgangsstoff vor seinem Ausfällen (bevorzugt schon vor seinem Lösen) mindestens teilweise von Vernetzern befreit werden, die Fasern des Ausgangsstoffs vernetzen. Dies kann zum Beispiel mittels einer alkalischen und/oder einer sauren Vorbehandlung erfolgen, insbesondere abhängig von der Art der vorliegenden Vernetzer. Eine Lyocell Faser ist eine fibrillierende Faser, die mit Molekülen vernetzt werden kann. Ein entsprechender Vernetzer kann stören, da dieser die Lösbarkeit von Lyocell-Cellulose in Lyocell-Lösungsmittel reduzieren kann. Das mindestens teilweise Entfernen des Vernetzers im Wege einer Vorbehandlung (zum Beispiel mittels Durchführens eines alkalischen Schritts und/oder eines sauren Schritts) unter teilweiser oder vollständiger Auflösung der unerwünschten Vernetzung kann die Reinheit der erhaltenen Cellulose erhöhen.

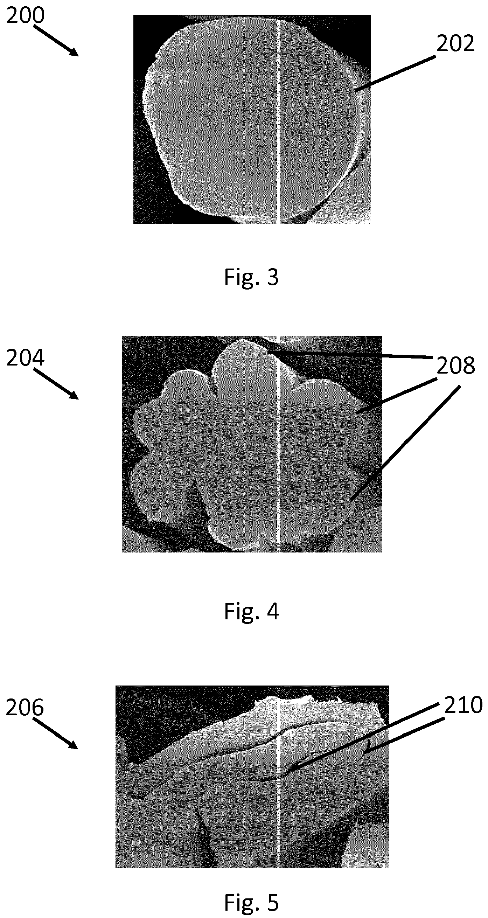

Gemäß einem Ausführungsbeispiel kann der Ausgangsstoff vor seinem Ausfällen (insbesondere vor seinem Lösen in dem Lösungsmittel) mit einer anderen Cellulosequelle versetzt werden. Beispielsweise kann die andere Cellulosequelle mindestens ein Material aus einer Gruppe aufweisen, die besteht aus Holzzellstoff, Hadernzellstoff (insbesondere Zellstoff aus Stoffresten wie Leinen, Hadern, etc.), Baumwolle (d.h. Cellulose aus einer Baumwollpflanze, siehe Figur 5), mittels eines Lyocell-Verfahrens hergestellter Cellulose (siehe Figur 3) und mittels eines Viskoseverfahrens hergestellter Cellulose (siehe Figur 4). Der Ausgangsstoff kann auch ein inhomogenes Mischgewebe sein. Die andere Cellulosequelle kann flexibel und je nach Verfügbarkeit beigemengt werden. Dadurch wird der großtechnische Einsatz des Lyocell-Verfahrens nicht durch etwaige vorübergehende Engpässe einer bestimmen Cellulosequelle beeinträchtigt. Vielmehr ist es zum Beispiel möglich, etwaige Fehlmengen an Altkleider-Cellulose durch andere Cellulosequellen zu kompensieren bzw. auszugleichen. Bevorzugt kann aber das Bilden des Ausgangsstoffs nur aus Altkleidern sein.

Gemäß einem Ausführungsbeispiel kann das Lösen des Ausgangsstoffs und/oder das Lösen der Cellulosequelle mittels eines Direktlöseverfahrens erfolgen. Vorzugsweise werden hierbei als Lösungsmittel tertiäre Aminoxide eingesetzt, besonders bevorzugt N-Methylmorpholin-N-oxid (NMMO).

Gemäß einem Ausführungsbeispiel kann das Verfahren ein Nachbearbeiten des Formkörpers aufweisen. Ein solches optionales Nachbearbeiten kann zum Beispiel ein Trocknen, Imprägnieren und/oder Umformen der erhaltenen Cellulose-Filamente aufweisen. Durch ein entsprechendes Nachbearbeiten ist es möglich, am Ende des Lyocell-Verfahrens anwendungsspezifisch die Formkörperherstellung abzuschließen.

Gemäß einem Ausführungsbeispiel kann der mindestens eine selektiv beibehaltene Fremdstoff in dem Formkörper verwendet werden, um eine Funktion des mindestens einen Fremdstoffs für den Formkörper auszunutzen. Im Rahmen der vorliegenden Anmeldung wird unter dem Begriff "Funktion" eines Fremdstoffs in einem Formkörper insbesondere eine technische Funktion (wie zum Beispiel thermoplastische Eigenschaften, elastische Eigenschaften, Farbgebung oder optische Aufhellung, antimikrobielle Eigenschaften) verstanden, die nur der Formkörper mit dem Fremdstoff, aber nicht ohne den Fremdstoff aufweist. Bei einer solchen Funktion kann es sich insbesondere um das Schaffen eines Effekts oder um das Verstärken eines Effekts handeln.

Gemäß einem exemplarischen Ausführungsbeispiel kann das Verfahren zum Herstellen des Formkörpers so durchgeführt werden, dass basierend auf einem Steuerkommando eine Menge von in den hergestellten Formkörpern verbleibende mindestens einen Fremdstoffs benutzerdefiniert eingestellt wird, insbesondere höher als ein prozesstechnisch erreichbarer Minimalwert eingestellt wird. Auf diese Weise ist es einem Benutzer möglich, das Ausmaß der Restkonzentration des mindestens einen Fremdstoffs in dem Formkörper flexibel und im Hinblick auf eine gewünschte Funktionalität des erhaltenen Formkörpers einzustellen.

Gemäß einem exemplarischen Ausführungsbeispiel kann das Verfahren ein Empfangen eines benutzerseitigen Signals zum Definieren einer Soll-Funktion der herzustellenden Formkörper und ein Einstellen von Prozessparametern zum Einstellen einer zum Erreichen der Soll-Funktion in den Formkörpern zu belassenden Menge von einem oder mehreren Fremdstoffen aufweisen. Hierzu kann basierend auf einem Steuerkommando eines Benutzers eine Datenbank, in der zu einzelnen Fremdstoffen zugehörige Funktionen abgespeichert sind, ein oder mehrere Fremdstoffe ausgewählt werden, die zum Erreichen der Soll-Funktion geeignet sind. Nach Ermittlung einer gewünschten Menge mindestens eines solchen Fremdstoffs kann dann der mindestens eine Prozessparameter so eingestellt werden, dass die gewünschte Funktion erreicht wird. Mögliche Prozessparameter sind in diesem Zusammenhang eine Einstellung eines mechanischen Zerkleinerungsverfahrens, eine Einstellung eines chemischen Reinigungsverfahrens, die Einstellung eines möglichen Bleichverfahrens, die Einstellung eines Filterns von Lyocell-Spinnlösung vor dem Verspinnen von Filamenten, die Einstellung eines möglichen Prozesses zum physikalischen Separieren von Konstituenten eines Ausgangsstoffs, ein Waschverfahren, etc.

Die erfindungsgemäß hergestellten Formkörper können zum Beispiel als Verpackungsmaterial, Fasermaterial, Textilverbundstoffe, Faserverbundstoffe, Faservliese, Nadelfilze, Polsterwatte, Gewebe, Gestricke, als Heimtextilien, wie Bettwäsche, als Kleidungsstücke, als Füllstoff, Beflockungsstoff, Krankenhaustextilien, wie Unterlagen, Windel oder Matratzen, als Stoff für Wärmedecken, Schuheinlagen, sowie Wundverbände verwendet werden. Ausführungsbeispiele der Erfindung können sowohl in verschiedensten technischen Bereichen als auch in der Medizin und in Kosmetik und Wellness anwendbar sein. In der Medizin können zum Beispiel Materialien zur Wundbehandlung und Wundheilung aus einem Träger, der die mechanischen Eigenschaften bestimmt, und einem biokompatiblem Beschichtungsmaterial aufgebaut sein, das besonders verträglich mit der Haut und mit der Oberfläche der Wunde ist. Zahlreiche andere Anwendungen sind möglich.

Im Folgenden werden exemplarische Ausführungsbeispiele der vorliegenden Erfindung mit Verweis auf die folgenden Figuren detailliert beschrieben.
Figur 1 zeigt ein Flussdiagramm eines Verfahrens zum Herstellen eines Cellulose aufweisenden Formkörpers gemäß einem exemplarischen Ausführungsbeispiel der Erfindung.
Figur 2 zeigt eine Apparatur zum Herstellen eines Cellulose aufweisenden Formkörpers gemäß einem exemplarischen Ausführungsbeispiel der Erfindung.
Figur 3 zeigt eine mittels eines Lyocell-Verfahrens hergestellte Cellulosefaser.
Figur 4 zeigt eine mittels eines Viskoseverfahrens hergestellte Cellulosefaser.
Figur 5 zeigt eine natürliche Cellulosefaser aus einer Baumwollpflanze.

Gleiche oder ähnliche Komponenten in unterschiedlichen Figuren sind mit gleichen Bezugsziffern versehen.

Bevor bezugnehmend auf die Figuren exemplarische Ausführungsbeispiele beschrieben werden, sollen einige grundlegende Überlegungen zusammengefasst werden, basierend auf denen exemplarische Ausführungsbeispiele der Erfindung abgeleitet worden sind.

Gemäß einem exemplarischen Ausführungsbeispiel der Erfindung kann eine Funktionalisierung von Recycling-Resten in einem Cellulose aufweisenden Formkörper erfolgen.

Bei der Aufbereitung von Recycling-Materialien als Ausgangsmaterial zur Herstellung von Lyocell-Fasern werden in der Regel hohe Anforderungen an eben dieses cellulosische Ausgangsmaterial gestellt. Insbesondere bei Prozessen zur Aufbereitung von Recycling-Materialien mit hohen Kunststoffanteilen ist gemäß exemplarischen Ausführungsbeispielen der Erfindung ein restloses Entfernen der Kunststoffe nicht nötig und auch gar nicht gewünscht. Es hat sich nämlich als vorteilhaft herausgestellt, gewisse Anteile an Fremdstoffen (wie zum Beispiel Kunststoffen) im Ausgangsmaterial zu belassen (ohne diese restlos zu entfernen), da solche geringen Mengen an Kunststoffen und anderen Fremdstoffen im Lyocell-Dope bzw. der Lyocell Spinnlösung sogar positive funktionelle Eigenschaften für die Lyocell-Fasern haben können. So kann beispielsweise ein gewisser Elastan-Rest im Ausgangsmaterial und somit auch in den fertig hergestellten Formkörpern gemäß einem exemplarischen Ausführungsbeispiel der Erfindung eine Flexibilität der Lyocell-Fasern schaffen. Ein PU-Rest in den Fasern kann mit Vorteil zu einer thermoplastischen Verformbarkeit und/oder einer erhöhten mechanischen Stabilität der erzeugten Formkörper oder eines daraus hergestellten Produkts führen. Daher kann gemäß einem exemplarischen Ausführungsbeispiel der Erfindung bewusst auf eine vollständige, restlose Entfernung der Kunststoff-Anteile (wie zum Beispiel Polyethylenterephthalat (PET), Polyamid (PA), Polyurethan (PU), etc.) verzichtet zu werden, da eine solche restlose Entfernung schwierig und ressourcenintensiv ist und aufgrund der von den Fremdstoffen bereitgestellten Funktion im Rahmen der Formkörper auch gar nicht nötig und wünschenswert ist, wie gemäß exemplarischen Ausführungsbeispielen der Erfindung erkannt wurde. Insbesondere geringe Mengen solcher Fremdstoffe können sogar positive Eigenschaften für die Lyocell-Fasern beisteuern und schaden nicht.

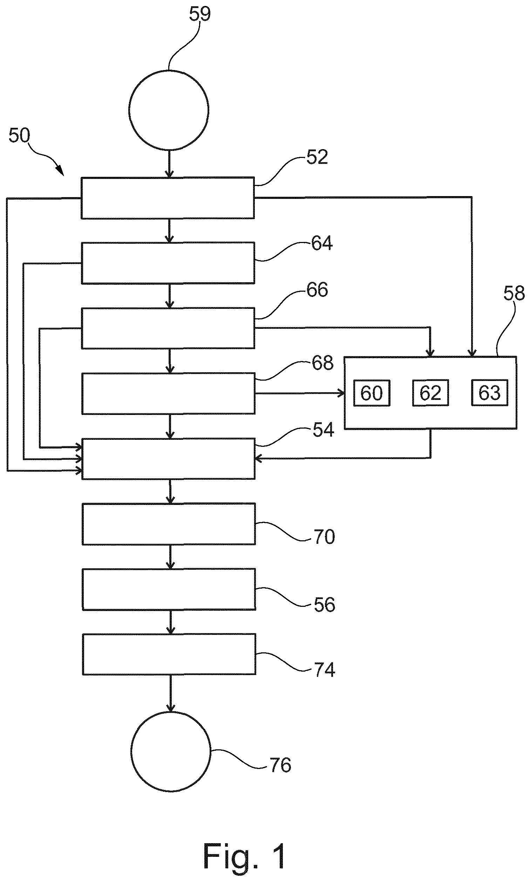

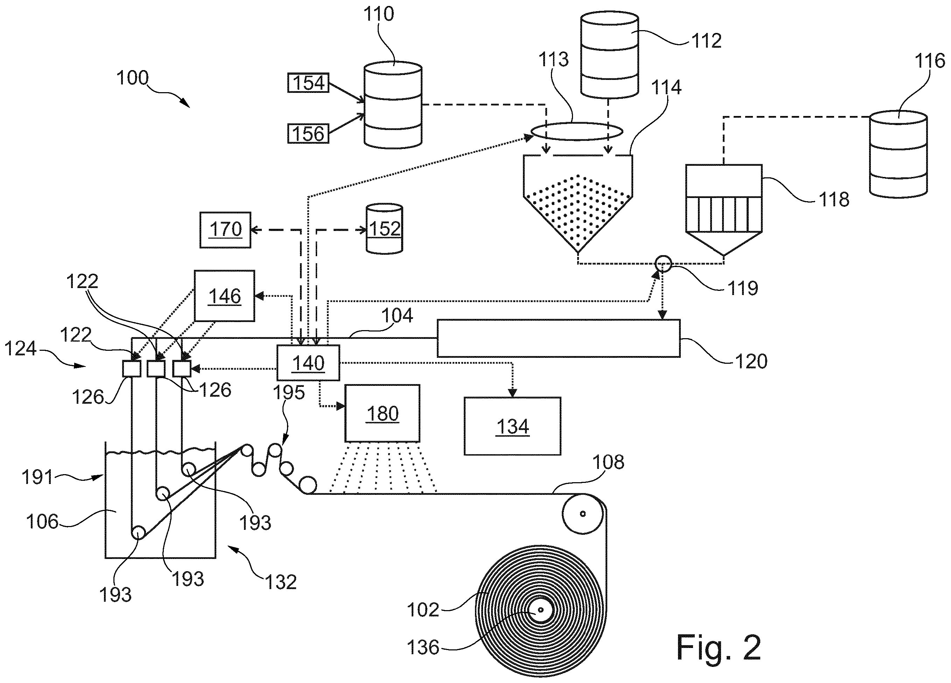

**Figur 1** zeigt ein Flussdiagramm 50 eines Verfahrens zum Herstellen eines Cellulose aufweisenden bzw. regenerierten cellulosischen Formkörpers 102 (vergleiche Figur 2) gemäß einem exemplarischen Ausführungsbeispiel der Erfindung.

Als Ausgangsstoff 110 (vergleiche Figur 2) kann von einem Benutzer bereits getragene und nicht mehr benötigte Kleidung, mithin Post-Consumer-Kleidung verwendet werden, die Cellulose aufweist. Anders ausgedrückt kann vor Beginn des Verfahrens zum Herstellen des Cellulose aufweisenden Formkörpers 102 der Ausgangsstoff 110 von einem Verbraucher bereits benutzt worden sein, siehe Bezugszeichen 59. Hierbei kann die Cellulose zum Beispiel als Textilgewebe vorliegen, insbesondere unter Verwendung weiterer Konstituenten (zum Beispiel synthetische Kunststoffe wie Polyester und Elastan). Wenn der Verbraucher das Kleidungsstück entsorgt, kann dieses als Post-Consumer Ausgangsstoff 110 für ein in Figur 1 dargestelltes Lyocell-Verfahren verwendet werden, das im Weiteren näher beschrieben wird. Es ist alternativ oder ergänzend auch möglich, einen Cellulose aufweisenden Pre-Consumer Ausgangsstoff 110 für ein solches Lyocell-Verfahren zu verwenden, zum Beispiel Verschnittreste aus der Kleidungsherstellung.

Somit wird, wie mit Bezugszeichen 52 dargestellt ist, der Ausgangsstoff 110 dem Lyocell-Verfahren zugeführt, wobei der wiederverwertete bzw. recycelte textile Ausgangsstoff 110 Cellulose und darüber hinaus diverse Fremdstoffe aufweist. Die Cellulose und die Fremdstoffe des Ausgangsstoffs 110 können beim Zuführen 52 in einem gemeinsamen Festkörperverbund (zum Beispiel als textiles Flächengebilde, Faserverbund oder Formkörperverbund) vorliegen, d.h. können Teil eines oder mehrerer Körper (zum Beispiel Kleidungsstücke oder Verschnittreste) oder Partikel (zum Beispiel geschredderte oder gemahlene Kleidungsstücke oder Verschnittreste) in der Festkörperphase sein. In einem solchen festen Körper bzw. festen Partikeln kann also eine Mischung aus der Cellulose und den Fremdstoffen vorliegen, die daher miteinander einstückig verbunden sein können. Somit stellt der Ausgangsstoff 110 eine wiederzuverwertende Cellulosequelle 154 dar, die ganz oder teilweise aus Resten aus einer Kleidungsherstellung und/oder aus Altkleidern gebildet sein kann. Die darin enthaltenen Fremdstoffe können einen Farbstoff, einen optischen Aufheller, einen antimikrobiellen Stoff wie Zinkoxid, etc., aufweisen. Ferner kann in dem Ausgangsstoff 110 als weiterer Fremdstoff Elastan enthalten sein, das während eines unten beschriebenen Lösens 54 von Cellulose ebenfalls mindestens teilweise gelöst werden kann. Solches Elastan ist häufig als Zusatzfaser in Kleidungsstücken enthalten, um den Kleidungsstücken Elastizität zu verleihen. Als zusätzlicher Fremdstoff kann der Ausgangsstoff 110 auch Polyester aufweisen, das beim Lösen 54 und nachfolgenden Ausfällen 56 an bzw. in der Cellulose verbleibt.

Im Weiteren wird beschrieben, wie auf Basis des Cellulose aufweisenden Ausgangsstoffs 110 Formkörper 102 aus Lyocell-Cellulose und nicht entfernten Fremdstoffen gemäß einem Ausführungsbeispiel der Erfindung hergestellt werden können. Hierfür wird der Ausgangsstoff 110 einer Apparatur 100 (siehe Figur 2) zum Durchführen eines Lyocell-Verfahrens zugeführt, vergleiche Bezugszeichen 52.

Zunächst kann der Ausgangsstoff 110 optional in mehrere Farbgruppen farblich vorsortiert werden (siehe Bezugszeichen 64), zum Beispiel in mehrere farbspezifische Farbgruppen (wie blau, rot, grün, gelb, schwarz und weiß) und in eine Restgruppe mit farbunspezifischem Ausgangsstoff (zum Beispiel bunte Textilien). Dies hat den Vorteil, dass später jeweils nur Ausgangsstoff 110 einer gemeinsamen Farbgruppe gelöst wird (siehe Bezugszeichen 54) und somit Farbstoffe einer einheitlichen oder mindestens im Wesentlichen einheitlichen Farbe für eine charakteristische Farbgebung der hergestellten Formkörper 102 eingesetzt werden. Das Ausbilden diffuser und uncharakteristischer Mischfarben in den hergestellten Formkörpern 102 kann dadurch vermieden werden und der herkömmlich als unerwünschter Fremdstoff eingestufte Farbstoff kann in den hergestellten Formkörper in 102 als funktioneller Farbstoff wiederverwendet werden. Mit Vorteil kann das Zuführen eines separaten Farbstoffs zum Färben der Formkörper 102 oder daraus hergestellte Produkte dann entbehrlich sein oder in nur verringerter Menge nötig sein. Wenn nach dem Vorsortieren 64 der Farbstoff einer Farbgruppe in dem Ausgangsstoff 110 verbleibt und die Farbgebung der hergestellten Formkörper 102 bestimmt, kann der Cellulose aufweisende Formkörper 102 ohne Durchführung einer Bleichprozedur, mithin einfach und umweltfreundlich, hergestellt werden.

Vor oder nach dem Vorsortieren 64 kann ein optionales, aber vorteilhaftes mechanisches Zerkleinern 66 des Ausgangsstoffs 110 durch Schreddern erfolgen. Dadurch kann ein Teil von vor allem großen nichtcellulosischen Störstoffen aus dem Ausgangsstoff 110 entfernt werden, beispielsweise Knöpfe, Nähte und Drucke der Altkleider, die zum Erzeugen des Ausgangsstoffs 110 mindestens teilweise verwendet worden sind. Durch das mechanische Zerkleinern 66 kann der Ausgangsstoff 110 zum Beispiel in Einzelfasern zertrennt werden.

Es ist optional auch möglich (siehe Block 68), den Cellulose aufweisenden Ausgangsstoff 110 mit anderen Cellulose aufweisenden Materialien (siehe weitere Cellulosequelle 156 in Figur 2) gemeinsam für das Lyocell-Verfahren einzusetzen. Somit kann der Ausgangsstoff 110 mit einem anderen Cellulose aufweisenden Ausgangsstoff vermischt werden, siehe Block 68. So kann der Ausgangsstoff 110 auch ein anderes Cellulose aufweisendes Material aufweisen, wie zum Beispiel Holz oder daraus extrahierter Zellstoff. Es ist also möglich, den wiederzuverwertenden Ausgangsstoff 110 mit einem weiteren Cellulose aufweisenden Ausgangsstoff 110 zu vermischen. Letzterer kann zum Beispiel Hadernzellstoff aus Textilien, Baumwolle aus einer Baumwollpflanze, aus einem Viskoseverfahren gewonnene Cellulose und/oder Cotton Linters (d.h. gegenüber den zum Beispiel ungefähr 38 mm langen Cotton Lint wesentlich kürzere Baumwollstränge, wie sie am Samen einer Baumwollpflanze wachsen) aufweisen. Der Anteil von Altkleidern an dem Ausgangsstoff 110 kann zum Beispiel zwischen 3 Gewichtsprozent und 100 Gewichtsprozent sein, insbesondere zwischen 10 Gewichtsprozent und 80 Gewichtsprozent. Besonders bevorzugt ist es, wenn dieser Anteil 100 Gewichtsprozent beträgt.

Das Verfahren kann ferner ein optionales, aber vorteilhaftes nur genau teilweises Entfernen 58 von einem, mehreren oder allen der Fremdstoffe aufweisen. Dieses Entfernen 58 kann direkt nach dem Zuführen 52 oder nach dem Zerkleinern 66 oder nach dem Mischen 68 erfolgen. Es ist auch möglich, die Prozedur des Entfernens 58 wegzulassen und mit einem Lösen 54 des Ausgangsstoffs 110 unmittelbar nach dem Zuführen 52, nach dem Vorsortieren 64, nach dem Zerkleinern 66 oder nach dem Mischen 68 fortzufahren.

Wird die Prozedur des Entfernens 58 durchgeführt, kann diese ein teilweises oder vollständiges Entfernen 60 nicht-cellulosischer Fasern aus dem Ausgangsstoff 110 aufweisen, zum Beispiel wenn das Vorhandensein von Elastanfasern oder Polyesterfasern in den fertig hergestellten Formkörpern 102 nicht gewünscht wird. Alternativ oder ergänzend kann die Prozedur des Entfernens 58 ein teilweises oder vollständiges Entfernen 62 von Metallen aus dem Ausgangsstoff 110 aufweisen, falls das Vorhandensein von Metallen in den Formkörpern 102 nicht gewünscht wird. Auch kann im Rahmen des Entfernens 58 der Ausgangsstoff 110 ganz oder teilweise von Fasern des Ausgangsstoffs 110 vernetzenden Vernetzern befreit werden (siehe Bezugszeichen 63). Falls eine solche Trennung von Einzelfasern gewünscht wird, kann ein Vernetzer (abhängig von seiner chemischen Natur) zum Beispiel mittels einer alkalischen und/oder einer sauren Vorbehandlung entfernt werden. Gemäß einem exemplarischen Ausführungsbeispiel der Erfindung bleibt nach dem Entfernen 58 aber immer ein gewisser einstellbarer Anteil von Fremdstoffen in dem nachfolgend zu lösenden Ausgangsstoff 110 enthalten.

Unmittelbar nach dem Zuführen 52, unmittelbar nach dem Vorsortieren 64, unmittelbar nach dem mechanischen Zerkleinern 66, unmittelbar nach dem Mischen 68 oder unmittelbar nach dem Entfernen 58 kann ein direktes Lösen des (reinen bzw. gemischten) Ausgangsstoffs 110 in einem Lösungsmittel 116 (zum Beispiel tertiäre Aminoxide wie zum Beispiel N-Methylmorpholin-N-oxid (NMMO)) vorteilhaft ohne chemische Vorbehandlung erfolgen. Ein solches Lösen 54 kann durch Überführen des Ausgangsstoffs 110 (gemeinsam mit den darin enthaltenen Fremdstoffen) in ein Lösungsmittel 116 erfolgen, wodurch eine Spinnmasse gebildet wird. Genauer gesagt kann der wie beschrieben vorbehandelte Ausgangsstoff 110 insbesondere auch ohne chemische Reinigung und ohne Einstellung der Viskosität direkt in Lösung übergeführt werden. Auf diese Weise kann das Herstellungs- bzw. Recyclingverfahren außergewöhnlich einfach und schnell sowie umweltfreundlich durchgeführt werden. Es hat sich überraschenderweise herausgestellt, dass nach dem beschriebenen Vorbehandeln in dem Ausgangsstoff 110 verbleibende Fremdstoffe (zum Beispiel Polyester bzw. Elastan) das Lyocell-Verfahren nicht stören und die Qualität der wiedergewonnenen Lyocell-Cellulose nicht negativ beeinflussen. Im Gegenteil, gewisse Mengen von Elastan können in den hergestellten Cellulosefasern verbleiben, ohne deren Eigenschaften zu verschlechtern. Auch gewisse Mengen verbleibenden Polyesters stören das erhaltene Produkt nicht, sondern können sogar die mechanische Integrität des herzustellenden Formkörpers 102 stärken.

Nach dem Lösen 54 des Ausgangsstoffs 110 in Lösungsmittel (bevorzugt NMMO) kann die erhaltene Lyocell-Spinnlösung durch eine oder mehrere Spinndüsen gepresst werden, wodurch Fäden bzw. Filamente honigzäher Viskosität entstehen (siehe Block 70, der dieses Spinnen bzw. Extrudieren betrifft).

Während und/oder nach dem Herabfallen dieser Fäden bzw. Filamente werden diese in Wirkverbindung mit einem wässrigen Milieu gebracht und dadurch verdünnt. Die Konzentration des Lösungsmittels 116 der Fäden bzw. Filamente wird dadurch in einem wässrigen Flüssigkeitsbad so weit reduziert, dass die Lyocell-Spinnlösung in eine feste Phase aus Cellulose-Filamenten überführt wird. Anders ausgedrückt kommt es zu einem Präzipitieren, Fällen oder Koagulieren der Cellulose-Filamente, siehe Bezugszeichen 56. Dadurch wird eine Vorform des Formkörpers 102 erhalten. Somit erfolgt ein Extrudieren 70 der Spinnmasse zu Formkörpern 102 im Wege eines Ausfällens 56 in einem Spinnbad (siehe Bezugszeichen 191 in Figur 2).

Das Lösen 54, Spinnen bzw. Extrudieren 70 und nachfolgende Ausfällen 56 mittels eines Lyocell-Verfahrens wird also basierend auf einem Ausgangsstoff 110 durchgeführt, der seinerseits wiederzuverwertendes bzw. zu recycelndes Cellulosematerial aufweist oder daraus besteht und von Fremdstoffen allenfalls teilweise befreit zu werden braucht.

Ferner kann das Verfahren ein Nachbearbeiten 74 der ausgefällten Lyocell-Cellulose zum Erhalten des Formkörpers 102 aus der Vorform des Formkörpers 110 aufweisen. Eine solche Nachbearbeitung kann zum Beispiel ein Trocknen, Imprägnieren und/oder Umformen der erhaltenen Filamente zu dem finalen Formkörper 102 umfassen. Zum Beispiel kann der Formkörper 102 durch das beschriebene Herstellungsverfahren zu Fasern, einer Folie, einem Gewebe, einem Vlies, einer Kugel, einem porösen Schwamm oder Beads verarbeitet werden und dann einer weiteren Nutzung zugeführt werden (vergleiche Bezugszeichen 76).

Der in dem Formkörper 102 oder der Vorform befindliche Anteil des mindestens einen Fremdstoffs kann mindestens 0,1 Gewichtsprozent betragen, bezogen auf ein Gesamtgewicht des Formkörpers 102. Die gezielt und bewusst in dem Formkörper 102 verbleibenden Reste der Fremdstoffe können verwendet werden, um eine Funktion des jeweiligen Fremdstoffs im Rahmen der Verwendung des Formkörpers 102 oder eines daraus hergestellten Produkts auszunutzen. In einem Formkörper 102 verbleibender Elastan-Fremdstoff kann funktionell verwendet werden, um dem hergestellten Formkörper 102 Elastizität zu verleihen. Ein im Formkörper 102 verbleibender Fremdstoff Polyester kann funktionell zum Versehen des Formkörpers 102 mit einer thermoplastischen Verformbarkeit bzw. zum Stärken der mechanischen Robustheit des Formkörpers 102 sowie eines daraus hergestellten Produkts eingesetzt werden.

Mit dem Verfahren entsprechend dem Flussdiagramm 50 gemäß Figur 1 ist es somit möglich, ein einfaches und mit geringem Aufwand durchführbares Herstellungsverfahren zum Herstellen von Formkörpern 102 zu schaffen, bei dem die Anforderungen an die Entfernung von einem oder mehreren Fremdstoffen aus dem Ausgangsstoff 110 äußerst niedrig sind. Anders als bei herkömmlichen Ansätzen geht das beschriebene Ausführungsbeispiel der Erfindung davon aus, dass die Fremdstoffe in dem Ausgangsstoff 110 zum Herstellen der Formkörper 102 nicht allesamt als störend in möglichst hoher Menge entfernt werden müssen, sondern zu einem gewissen Teil in dem Ausgangsstoff 110 und der daraus hergestellten Lyocell-Spinnlösung 104 verbleiben sollen, um den hergestellten Formkörpern 102 eine oder mehrere gewünschte Zusatzfunktionen zu verleihen. Diese Zusatzfunktionen können im Bereitstellen einer Farbe, erhöhten Elastizität, erhöhten mechanischen Robustheit, antimikrobiellen Wirkung, etc., bestehen. Insbesondere ist es einem Benutzer beim Durchführen des Verfahrens gemäß dem Flussdiagramm 50 von Figur 1 möglich, auf das Herstellungsverfahren einen Einfluss zu nehmen, um den Formkörper 102 mit einer gewünschten Funktion auszustatten, was durch das Einstellen des Ausmaßes des Belassens von einem oder mehreren Fremdstoffen aus dem Ausgangsstoff 110 in den Formkörpern 102 bewerkstelligt werden kann.

**Figur 2** zeigt eine Apparatur 100 zum Herstellen eines Cellulose aufweisenden Formkörpers 102 mittels eines Lyocell-Verfahrens gemäß einem exemplarischen Ausführungsbeispiel der Erfindung, das bezugnehmend auf Figur 1 beschrieben wurde.

Figur 2 zeigt also eine Apparatur 100 gemäß einem exemplarischen Ausführungsbeispiel der Erfindung zum Herstellen eines Cellulose aufweisenden Formkörpers 102, der zum Beispiel in Form eines Vlieses (Nonwoven), als Faser, Folie, Kugel, Textilgewebe, Schwamm oder in Form von Beads oder Flakes hergestellt werden kann. Gemäß Figur 2 wird der Formkörper 102 direkt aus einer Spinnlösung 104 hergestellt. Letztere wird mittels eines Koagulations-Fluids 106 (insbesondere aus Luftfeuchtigkeit) und/oder eines Koagulations-Bads 191 (beispielsweise ein Wasserbad, das optional tertiäre Aminoxide wie zum Beispiel N-Methylmorpholin-N-oxid (NMMO) aufweist) in Cellulosefasern 108 als Formkörper 102 umgewandelt. Mittels der Apparatur 100 kann ein Lyocell-Verfahren ausgeführt werden. Auf diese Weise können als Formkörper 102 zum Beispiel im Wesentlichen endlose Filamente oder Fasern 108 oder Mischungen im Wesentlichen endloser Filamente und Fasern 108 diskreter Länge hergestellt werden. Eine Mehrzahl von Düsen, die jeweils eine oder mehrere Öffnungen 126 (die auch als Spinnlöcher bezeichnet werden können) haben, sind bereitgestellt, um Lyocell-Spinnlösung 104 auszustoßen.

Wie Figur 2 entnommen werden kann, kann einem Speichertank 114 über eine Dosiereinrichtung 113 ein Cellulose basierter Ausgangsstoff 110 zugeführt werden.

Gemäß einem Ausführungsbeispiel kann ein Wassereintrag in den Cellulose basierten Ausgangsstoff 110 durch ein unten näher beschriebenes Lösungsmittel 116 (insbesondere NMMO) erfolgen. Auch kann der Cellulose basierte Ausgangsstoff 110 selbst bereits eine gewisse Restfeuchte enthalten (trockener Zellstoff zum Beispiel hat häufig eine Restfeuchte von 5 Gewichtsprozent bis 8 Gewichtsprozent). Insbesondere kann gemäß dem beschriebenen Ausführungsbeispiel der Ausgangsstoff 110 ohne Vorbefeuchtung direkt in eine Mischung aus Wasser und Lösungsmittel 116 gegeben werden. Ein in Figur 2 gezeigter optionaler Wasserbehälter 112 kann dann weggelassen werden.

Gemäß einem alternativen Ausführungsbeispiel kann der Cellulose aufweisende Ausgangsstoff 110 zusätzlich angefeuchtet werden, um dadurch feuchte Cellulose bereitzustellen. Zu diesem Zweck kann Wasser aus einem optionalen Wasserbehälter 112 dem Speichertank 114 über die Dosiereinrichtung 113 zugeführt werden. Daher kann die Dosiereinrichtung 113, gesteuert mittels einer Steuereinrichtung 140, dem Speichertank 114 einstellbare relative Mengen von Wasser und Ausgangsstoff 110 zuführen.

Ein geeignetes Lösungsmittel 116, bevorzugt tertiäre Aminoxide wie zum Beispiel N-Methylmorpholin-N-oxid (NMMO), beziehungsweise eine wässrige Mischung des Lösungsmittels 116, zum Beispiel eine 76%ige Lösung von NMMO in Wasser, ist in einem Lösungsmittelbehälter enthalten. Die Konzentration des Lösungsmittels 116 kann in einer Konzentriereinrichtung 118 entweder durch Zugabe von reinem Lösemittel oder Wasser eingestellt werden. Das Lösungsmittel 116 kann dann mit dem Ausgangsstoff 110 mit definierbaren relativen Mengen in einer Mischeinheit 119 gemischt werden. Auch die Mischeinheit 119 kann mittels der Steuereinheit 140 gesteuert werden. Dadurch wird der Cellulose aufweisende Ausgangsstoff 110 in dem konzentrierten Lösungsmittel 116 in einer Löseeinrichtung 120 mit einstellbaren relativen Mengen gelöst, wodurch die Lyocell-Spinnlösung 104 erhalten wird.. Die relativen Konzentrationsbereiche (auch als Spinnfenster bezeichnet) der Komponenten Ausgangsstoff 110, Wasser und Lösungsmittel 116 in der Spinnlösung 104 zur Herstellung von cellulosischen Regeneratformkörpern nach dem Lyocell-Verfahren können, wie einem Fachmann bekannt, geeignet eingestellt werden.

Die Lyocell-Spinnlösung 104 wird einer Fasererzeugungseinrichtung 124 zugeführt (die mit einer Anzahl von Spinnbalken oder Jets 122 ausgebildet sein kann).

Wenn die Lyocell-Spinnlösung 104 durch die Öffnungen 126 der Jets 122 geführt wird, wird sie in eine Mehrzahl von parallelen Fäden aus Lyocell-Spinnlösung 104 aufgeteilt. Die beschriebene Prozessführung transformiert die Lyocell-Spinnlösung 104 in zunehmend lange und dünne Fäden, deren Eigenschaften durch entsprechende Einstellung der Prozessbedingungen, gesteuert durch die Steuereinheit 140, eingestellt werden können. Optional kann ein Gasfluss die Lyocell-Spinnlösung 104 auf ihrem Weg von den Öffnungen 126 zu einer Faseraufnahmeeinheit 132 beschleunigen.

Nachdem die Lyocell-Spinnlösung 104 sich durch die Jets 122 und weiter abwärts bewegt hat, interagieren die langen und dünnen Fäden der Lyocell-Spinlösung 104 mit dem Koagulations-Fluid 106.

Bei der Wechselwirkung mit dem Koagulations-Fluid 106 (zum Beispiel Wasser) wird die Lösungsmittelkonzentration der Lyocell-Spinnlösung 104 reduziert, sodass die Cellulose des Ausgangsstoffs 110 zumindest teilweise als lange und dünne Cellulosefasern 108 (die immer noch Reste von Lösungsmittel und Wasser enthalten können) koaguliert bzw. ausfällt.

Während oder nach der initialen Bildung der individuellen Cellulosefasern 108 aus der extrudierten Lyocell-Spinnlösung 104 werden die Cellulosefasern 108 an der Faseraufnahmeeinheit 132 aufgenommen. Die Cellulosefasern 108 können in das in Figur 2 dargestellte Koagulations-Bad 191 (zum Beispiel ein Wasserbad, optional aufweisend ein Lösungsmittel wie NMMO) eintauchen und können bei Wechselwirkung mit der Flüssigkeit des Koagulations-Bads 191 ihr Ausfällen abschließen. Abhängig von der Prozesseinstellung der Koagulation kann die Cellulose Cellulosefasern 108 bilden (wie gezeigt, wobei die Cellulosefasern 108 einstoffig bzw. integral miteinander verschmolzen ("merging") sein können oder als getrennte Cellulosefasern 108 vorliegen können) oder kann sich an der Faseraufnahmeeinheit 132 eine Folie bzw. ein Film aus Cellulose bilden (nicht in Figur 2 dargestellt).

Die Cellulosefasern 108 werden also aus den Spinndüsen der Jets 122 extrudiert und durch das Spinnbad bzw. Koagulations-Bad 191 (enthaltend zum Beispiel Wasser und NMMO in niedriger Konzentration zur Ausfällung/Koagulation) geführt, dabei werden die Cellulosefasern 108 um eine jeweilige Umlenkrolle 193 im Koagulations-Bad 191 geführt und außerhalb des Koagulations-Bads 191 einer Abzugsgalette 195 zugeführt. Die Abzugsgalette 195 sorgt für Weitertransport und Nachverstreckung der Cellulosefasern 108, um einen gewünschten Titer zu erreichen. Nach der Abzugsgalette 195 wird das Faserbündel aus den Cellulosefasern 108 in einer Wascheinheit 180 gewaschen, gegebenenfalls aviviert und schließlich geschnitten (nicht gezeigt).

Obwohl dies in Figur 2 nicht dargestellt ist, kann Lösungsmittel 116 der Lyocell-Spinnlösung 104, das aus den Cellulosefasern 108 beim Koagulieren und bei einem nachfolgenden Waschen in der Wascheinheit 180 entfernt worden ist, zumindest teilweise zurückgewonnen bzw. recycelt werden und in einem nachfolgenden Zyklus wieder in den Speichertank 114 übergeführt werden.

Während des Transports entlang der Faseraufnahmeeinheit 132 kann der Formkörper 102 (hier in Form der Cellulosefasern 108) mittels der Wascheinheit 180 gewaschen werden, indem Letztere eine Waschflüssigkeit zum Entfernen von Lösungsmittelresten zuführt. Danach kann der Formkörper 102 getrocknet werden.

Der Formkörper 102 kann darüber hinaus einer Nachbehandlung unterzogen werden, siehe die schematisch dargestellte Nachbehandlungseinheit 134. Zum Beispiel kann eine solche Nachbehandlung eine Hydroverschlingung, eine Nadelbehandlung, eine Imprägnierung, eine Dampfbehandlung mit einem unter Druck zugeführten Dampf und/oder ein Kalandrieren, etc., aufweisen.

Die Faseraufnahmeeinheit 132 kann den Formkörper 102 einer Aufwickeleinrichtung 136 zuführen, an welcher der Formkörper 102 aufgewickelt werden kann. Der Formkörper 102 kann dann als Rollgut einer Entität zugeführt werden, die Produkte wie zum Beispiel Wischtücher oder Textilien auf Basis des Formkörpers 102 herstellt.

Bei dem Lyocell-Verfahren gemäß Figur 2 kann ein Benutzer über eine Eingabe/Ausgabe-Schnittstelle 170 der Steuereinheit 140 vorgeben, welche Funktion oder Funktionen ein herzustellender Formkörper 102 haben soll. Die Eingabe/Ausgabe-Schnittstelle 170 kann Eingabeelemente (zum Beispiel eine Tastatur, ein Touchpad und/oder eine Steuerkonsole) aufweisen, über die ein Benutzer Steuerkommandos an die Apparatur 100 übermitteln kann. Die Eingabe/Ausgabe-Schnittstelle 170 kann ferner Ausgabeelemente (zum Beispiel eine elektronische Anzeige) aufweisen, über die einem Benutzer zum Beispiel Informationen über eine Zusammensetzung des verarbeiteten Mediums und/oder andere Prozessparameter zur Kenntnis gebracht werden können. Zum Beispiel kann der Benutzer eine gewünschte Farbe des herzustellenden Formkörpers 102 vorgeben, ein gewünschtes Maß an Elastizität, mechanischer Robustheit, antimikrobieller Wirkung, etc. Die Steuereinheit 140 kann dann zum Beispiel auf eine Datenbank 152 (beispielsweise einen elektronischen Massenspeicher wie eine Festplatte) zugreifen, wo beispielsweise in Form einer Nachschlagetabelle Korrelationen zwischen Soll-Funktionen des herzustellenden Formkörpers 102 und in dem Formkörper 102 verbleibenden Restkonzentrationen von Fremdstoffen abgespeichert sein kann. Zum Beispiel kann in der Nachschlagetabelle abgespeichert sein, dass ein entsprechendes Vorsortieren des Ausgangsstoffs 110 nach Farben und ein Weglassen oder entsprechendes Konfigurieren eines Bleichens des Ausgangsstoffs 110 während Durchführung des Herstellungsverfahrens zum Erzielen einer bestimmten Farbe der hergestellten Formkörper 102 durchgeführt werden kann, ohne dass separater Farbstoff zugeführt werden muss. Gemäß einem anderen Ausführungsbeispiel kann in der Nachschlagetabelle die Information enthalten sein, dass durch das Belassen einer gewissen Menge von Elastan in dem Ausgangsstoff 110 und folglich in der Lyocell-Spinnlösung 104 die hergestellten Formkörper 102 mit einer bestimmten Elastizität ausgestattet werden können. Noch ein anderes Ausführungsbeispiel kann das Belassen einer gewissen Menge von Polyester aus dem Ausgangsstoff 110 in dem Formkörper 102 dem Erreichen einer erhöhten mechanischen Festigkeit der Formkörper 102 zugeordnet werden. Das Beibehalten einer gewissen Menge Zinkoxid aus dem Ausgangsstoff 110 in den Formkörpern 102 kann in der Nachschlagetabelle mit einer antimikrobiellen Wirkung korreliert werden, welche die hergestellten Formkörper 102 dann zeigen können. Auf diese Weise kann die Steuereinheit 140 eine von einem Benutzer gewünschte Soll-Funktion der Formkörper 102 mithilfe von Information aus der Datenbank 152 dazu verwenden, Prozessparameter bzw. einzelne Verfahrensschritte des Herstellungsverfahrens gemäß Figur 1 und Figur 2 so anzupassen, dass die gewünschte Funktion in dem Formkörper 102 erreicht wird. Auf diese Weise können Fremdstoffe in dem Formkörper 102 belassen werden und dort zur Funktionalisierung der Formkörper 102 verwendet werden.

Im Weiteren werden zusätzliche Ausführungsbeispiele der Erfindung beschrieben. Insbesondere kann gemäß einem exemplarischen Ausführungsbeispiel eine Funktionalisierung von Fremdkomponenten aus Rezyklaten durch selektive Zellstoffweiterverwendung erfolgen.

Ein exemplarisches Ausführungsbeispiel der Erfindung betrifft die Funktionalisierung von holzfremden Zusatzstoffen als Fremdstoffe, welche aus einem Rezyklat stammen und gezielt wieder in eine erzeugte Faser eingebaut werden. Dadurch werden spezielle Eigenschaften dieser Zusatzstoffe utilisiert und/oder besondere Eigenschaften der erzeugten Faser erreicht. Ausführungsbeispiele der Erfindung zeigen somit einen Weg auf, Recycling durch spezielle Kreisläufe zu realisieren bzw. zu intensivieren. Dies kann durch Verzicht auf unnötige oder funktionell sogar unerwünschte übermäßige Reinheit und/oder dadurch erfolgen, dass eine Vorbenutzung anschaulich zum Kriterium einer besonders bevorzugten Wiederverwendung wird. Der Einsatz von Recycling-Cellulose, bevorzugt hergestellt aus Alttextilien, zur Produktion von künstlich hergestellten Cellulose-Fasern ohne vollständige Entfernung von Fremdstoffen ist ökologisch sehr vorteilhaft, da aufwendige Trennverfahren bei der Pulpherstellung entfallen oder durch einfachere Trenn- und/oder Reinigungsverfahren ersetzt werden können. Herkömmlich als unerwünscht angesehene Nebenbestandteile aus den Cellulose aufweisenden Rohstoffen (zum Beispiel Holz, Maisstroh, Bagasse, Baumwolle), die daher im Herstellungsverfahren eliminiert wurden, können gemäß einem exemplarischen Ausführungsbeispiel in einem hergestellten Formkörper 102 mindestens zum Teil verbleiben und dort eine spezifische Zusatzfunktion erfüllen.

Ein herkömmliches Vorurteil bestand darin, Alttextilien durch teilweise komplexe Verfahrensschritte praktisch alle Beimengungen entziehen zu müssen, um reine Cellulose zurückzugewinnen. Entsprechende Reinigungsverfahren sind aufwändig und oft ökologisch bedenklich, sodass der angestrebte Effekt effizienter Ressourcenverwertung beinahe ins Gegenteil verkehrt wird.

Bei der Verwendung von rezyklierten Materialien als Rohstoffe für die Zellstoffherstellung ist von einer nur mäßigen Reinheit dieser Rezyklate auszugehen. Solche Rezyklate sind häufig mit nicht holztypischen Materialien verunreinigt. Die Entfernung oder Disfunktionalisierung dieser Materialien ist aufwändig und häufig umweltbelastend. Diese erwähnte Umweltbelastung kann sowohl Energieverbrauch (zum Beispiel zur Ozonerzeugung bei Bleichen) als auch Prozessnebenkreisläufe (zum Beispiel chemische Abreicherung von bestimmten Materialien) betreffen.

Für die Herstellung von Zellstoff zum Einsatz in Lyocellprozessen können Recyclingmaterialien bei der Zellstoffherstellung verwendet werden. Bei der Aufbereitung dieser Recyclingmaterialien (Textilrecycling) fallen bei der Schließung eines Stoffkreislaufes verschiedene Fremdstoffe an, welche bei der Herstellung einer Faser entfernt werden, damit die technischen bzw. physikalischen Eigenschaften gegenüber einer nicht nichtrecycelten Faser ähnlich bzw. identisch werden. Normalerweise werden solche Fremdstoffe (wie zum Beispiel Fremdpolymere, Metalle oder andere chemische Verbindungen) entfernt (zum Beispiel mittels chemischer Reaktionen, Ausbleichen, mechanischer Filterung, etc.). Insbesondere für die Herstellung von Viskose und Fasern nach dem Lyocell-Verfahren ist es also üblich, eine vollständige Abreicherung von Fremdmaterialien anzustreben.

Erstaunlicherweise wurde gefunden, dass durch gezielte Steuerung von Restkonzentrationen im Rahmen des Abreicherungsverfahrens (also des Recyclingprozesseses) vorteilhafte Eigenschaften in der resultierenden Faser bzw. dem produzierten Zellstoff erreicht werden können. Diese so erreichte Funktionalisierung von Restbestandteilen aus dem Rezyklat wird im Weiteren im Rahmen von exemplarischen Ausführungsbeispielen der Erfindung beschrieben.

Insbesondere wurde von den vorliegenden Erfindern wurde gefunden, dass durch die gezielte Steuerung von Rezyklatanteilen in einem Zellstoff gewünschte Eigenschaften in einer spezifischen Anwendung einer Lyocellfaser unterstützt, gesteuert oder anderweitig beeinflusst werden können. Es hat sich auch gezeigt, dass sich die Umweltbelastung, welche sich durch die Logistik eines Multiproduktesortiments (d.h. Zellstoffe unterschiedlich herstellen, verarbeiten, ausliefern, etc., je nach deren speziellen Reasidualienateilen) deutlich niedriger ist als eine vollständige Abreicherung der Fremdmaterialien in einem Rezyklat.

Für einen Zellstoff gemäß einem exemplarischen Ausführungsbeispiel der Erfindung können Alttextilien auf Basis von Baumwolle, Viskose und/oder Lyocell-Cellulose, sowie Gemische davon und/oder mit anderen Konstituenten verwendet werden. Dabei findet eine Funktionalisierung des partiellen Abbaus der Kettenlängen im Rahmen der Gebrauchsnutzung statt. Dabei gilt insbesondere festzuhalten, dass zum Beispiel native Baumwolle bedingt durch ihren hohen DP-Wert (wobei DP für den durchschnittlichen Polymerisationsgrad steht, d.h. die Anzahl der Monomereinheiten pro Makromolekül) in NMMO relativ schlecht löslich ist. Demgegenüber ist ein Rezyklat mit einem entsprechenden Baumwollanteil durch die vorherige Herstellung und den anschließenden Gebrauch (insbesondere infolge Einwirkung von UV, Wärme, Wasser, mechanischer Belastung) dadurch gekennzeichnet, dass der DP-Wert in einen Bereich sinkt, welcher eine bessere Lösung in NMMO ermöglicht. Typische Zahlenwerte für diese Verschiebung des gausschen Mittelwertes der DP-Werte ist von bis zu 3000 (und teilweise sogar darüber) bei nativer Baumwolle zu einem Wert bei Rezyklaten von unter 2000 mL/g, bevorzugt unter 1000 mL/g, besonders bevorzugt unter 800 mL/g. Die genannten Werte beziehen sich auf die Grenzviskositätszahl (die mit dem Polymerisationsgrad der Cellulose korreliert) in Einheiten von mL/g. Durch optionale, aber vorteilhafte zusätzliche Maßnahmen wie Selektion, Mischung, Kochung, etc., kann ein für den Lyocellprozess besonders gut geeigneter GVZ-Wert im Bereich von 200 ml/g bis 700 mL/g erreicht werden.

In einer bevorzugten Ausführungsform werden aus Rezyklaten die gewünschten Anteile von Titandioxid (TiO₂) eingestellt. Der so hergestellte Zellstoff oder ein aus unterschiedlichen Zellstoffen zusammengestellter Mix mit dem gewünschten Anteil an TiO₂ kann in zu einem Lyocell-Formkörper 102 verarbeitet werden. Nach weiteren Verarbeitungsschritten kann eine resultierende Stapelfaser also einen Anteil von TiO₂ als Fremdstoff mit mattierender Funktion aufweisen.

In einer weiteren besonders bevorzugten Ausführungsform werden Rest-Polymere, beispielsweise Polyester, aus Rezyklaten als Haftungsverstärker unter den Cellulosefasern oder als thermoplastische Eigenschaftsverstärker innerhalb eines Lyocell-Formkörpers 102 verwendet. Solche Polymere bleiben im Wesentlichen inert, bis zur Fertigstellung entsprechender Prozeduren im Produktionsprozess. Insbesondere lässt sich so eine nachträgliche Versteifung eines Gewebes durch Wärme (anschaulich in ähnlicher Weise wie mit Heissleim) erreichen (zum Beispiel vorteilhaft zur Herstellung von bügelfreien Hemden, einer Plissierung, etc.). Zur Herstellung von Geweben, welche die Eigenschaft einer hoher Formstabilität haben sollen (zum Beispiel bügelfrei), kann dadurch ein sehr einfaches Verfahren bereitgestellt werden.

Durch die gezielte Steuerung des Anteils von Restpolymeren (wie zum Beispiel Polyester aus Nähfäden von Hemden) lässt sich eine gewisse Thermoplastzität in einer Lyocellfaser als Formkörper 102 erzielen, welche den entsprechenden Anteil von Restpolymeren aus dem Rezyklat über einen Zellstoff gemäß einem exemplarischen Ausführungsbeispiel der Erfindung über den Lyocellprozess wieder in einen Fasertyp zurückbringt (im Sinne eines dedizierten Stoffkreislaufes), der zum Beispiel zur Herstellung eines formbeständigen Textils (beispielsweise ein Hemd) verwendet werden kann. Hierbei können synergistisch Formkörper 102 bzw. daraus hervorgehende Produkte mit verbesserten Eigenschaften erhalten werden (zum Beispiel eine bessere, d.h. größere Wasserhaltung, weil durch die faserinherente verbesserte Formstabilität weniger Avivage zur Herstellung einer bügelfreien Qualität benötigt wird). Eine solche, gemäß einem exemplarischen Ausführungsbeispiel der Erfindung durchgeführte Herstellung eines knitterreduzierten Textilprodukts oder formstabilen Nonwovens bzw. Vlieses stellt eine besonders ökologische Variante eines gezielt gesteuerten Stoffkreislaufes dar.

In einer weiteren besonders bevorzugten Ausführungsform werden Rezyklate von Alttextilien, welche mit Küpenfarbstoffen (d.h. wasserunlöslichen Farbstoffen mit besonderer Eignung zum Färben von Textilien auf Cellulosebasis) gefärbt wurden (zum Beispiel Demin-Stoffe), in gezielter Konzentration und/oder selektierter Farbzusammensetzung der Zellstoffproduktion beigebeben. Durch den Herstellungsprozess werden einerseits Farbstoffe wie Denim-Indigo in ihrer Farbe zwar verändert, andererseits aber auch tief in eine Lyocellfaser eingebettet. Am Beispiel der Denimstoffe lassen sich verschiedene Vorzüge dieser Herangehensweise aufzeigen. Denimstoffe haben mindestens eine der folgenden Eigenschaften:
- Traditioneller Denim: Körperbindung, d.h. diagonal verlaufender Grat und/oder dichter Körper. Außerdem wird zwischen Kett- und Schussköper unterschieden, je nachdem, ob die Kett- oder Schussfäden oben überwiegen. Die Kette ist blau, der Schuss weiß. Auf der Webmaschine wird Denim so gewoben, dass die blauere Seite oben ist. Um die Mechanik der Webmaschine zu schonen, wird Denim heute meist mit der kettlastigen Seite (im oben angesprochenen Fall die Warenoberseite bzw. die blaue Seite) nach unten gewoben. Des Weiteren wird dadurch ein Schutz vor Verschmutzungen der eigentlichen Warenoberseite in der Weberei erreicht.
- Denimstoffe werden traditionell aus Baumwollfasern hergestellt. Ursprünglich wurden sie durchgehend mit Indigo-Farbstoffen gefärbt. Mittlerweile sind aber Garne mit variablen Durchfärbungen für Denimstoffe im Einsatz.
- Denim-Variationen: Denimgarne werden nur noch oberflächlich gefärbt, damit der Stonewashed-Effekt leichter und umweltfreundlicher (d.h. mit weniger Aufwand im Sinne von weniger eingesetzter Zeit und Energie) hergestellt werden kann.

Ein Lyocell-Formkörper 102 gemäß einem exemplarischen Ausführungsbeispiel der Erfindung, der aus einem Zellstoff mit definiertem und selektierem Denimanteil hergestellt ist, hat einen vom der normalen Baumwollfaser abweichenden Weisswert und kann gegebenenfalls sogar direkt farbtragend sein. Eine gemäß einem solchen exemplarischen Ausführungsbeispiel der Erfindung realisierte Durchfärbung durch die ganze Faser erlaubt es, die so hergestellte Faser mit einer normalen Faser zu mischen. Hier kann dann insbesondere die Färbung der normalen Faser derart gesteuert werden, dass die Farbstoffauslösung für die Erzielung des Stonewasheffektes in geeigneter Weise erfolgt. Durch den Restanteil einer gemäß einem exemplarischen Ausführungsbeispiel der Erfindung als Formkörper 102 hergestellten Faser kann (da zum Beispiel durchgehende Restfarbstoffe vorhanden sind) sichergestellt werden, dass dieser Stonewasheffekt diesen Faseranteil nicht besonders betrifft. Durch zusätzliches Waschen durch den Konsumenten findet keine weitere Verfärbung statt.

Ein anderes exemplarisches Ausführungsbeispiel der Erfindung betreffend die Funktionalisierung von Formkörpern 102 basierend auf Fremdstoffen in Rezyklaten besteht in einer gezielten Bleichung der anteiligen alten Denim-Farbstoffe. Dadurch kann zum Beispiel das Indigo in Isatin umgewandelt werden, was bei einem Denim-Textilprodukt einen typischen altersmäßigen Gelbstich ausmacht. Die Verwendung eines gemäß einem exemplarischen Ausführungsbeispiel der Erfindung hergestellten Zellstoffs erlaubt es auch, den Baumwollfaseranteil in einem Denimprodukt durch Formkörper 102 gemäß einem exemplarischen Ausführungsbeispiel der Erfindung als Substitut zu reduzieren. In Anbetracht einer globalen Ressourcenoptimierung (insbesondere eine Reduktion der Anbaufläche für Baumwolle zur Ermöglichung einer Erhöhung der Anbaufläche für Nahrungsmittel) ist dies vorteilhaft.

In einer weiteren besonders bevorzugten Ausführungsform werden Rezyklate zur Zellstoffherstellung mit biociden Eigenschaften verwendet. Durch geeignete Rezyklatselektion und Aufbereitung sind diese Materialien auch nach dem Lyocellprozess immer noch biocid. Dadurch lassen sich Formkörper 102 und daraus hergestellte Produkte herstellen, welche eine biocide Funktionalität bereitstellen (zum Beispiel Vliese bzw. Nonwovens für medizinische und kosmetische Produkte, Textilien im medizinischen Umfeld, geruchsreduzierende Sportkleidung, Bettwaren mit Milbenschutz, etc.). Die reinhaltende Wirkung einer derart ausgerüsteten Faser als Formkörper 102 gemäß einem exemplarischen Ausführungsbeispiel der Erfindung ist hierbei von Vorteil.

In einer weiteren besonders bevorzugten Ausführungsform werden bei der Zellstoffherstellung Rezyklate mit einem substanziellen Anteil von Lyocell-Fasern als Formkörper 102 verwendet. Durch die Verwendung eines derartigen Zellstoffes für den Lyocellprozess werden Rezyklatprodukte möglich, welche sich in ihren technischen Eigenschaften nur äußerst geringfügig von einer LyocellFaser unterscheiden, die ohne Rezyklate hergestellt wurde. Insbesondere sind in dieser Ausführungsform die Weisswerte und Festigkeiten hochgradig mit der Lyocellfaser ohne Rezyklate korreliert.

In einer weiteren besonders bevorzugten Ausführungsform werden Rezyklate aus Alttextilien auf Lyocell- und/oder Viskosebasis verwendet. Dadurch kann es ermöglicht werden, einen für einen Lyocellprocess vorteilhaften niedrigen DP-Wert ohne zusätzliche Maßnahmen zu erreichen.

Ein Zellstoff kann gemäß einem exemplarischen Ausführungsbeispiel der Erfindung für einen Lyocellprozess geeignet sein. Ein solcher Zellstoff kann einen Rezyklatanteil von größer als 3 Gewichtsprozent enthalten. Ferner kann als Fremdstoff in einem entsprechenden Formkörper 102 ein holzfremder Nicht-Zellstoff-Anteil vorhanden sein, insbesondere von größer als 10 ppm, weiter insbesondere von größer als 100 ppm. Mit Vorteil kann der genannte Rezyklatanteil aus Alttextilien stammen, die aus gleichen oder vergleichbaren Anwendungen stammen wie die aus dem Zellstoff produzierten Produkte und/oder kann eine gleiche oder vergleichbare Rohstoffbasis aufweisen wie die aus dem Zellstoff produzierten Produkte und/oder Zwischenprodukte. Diese holzfremden Anteile können aus dem Rezyklat stammen. Die verwendeten Rezyklate können einen DP-Wert von 100 mL/g bis 2000 mL/g haben, bevorzugt 150 mL/g bis 1000 mL/g, besonders bevorzugt 200 mL/g bis 700 mL/g, jeweils ausgedrückt als GVZ. Die genannten holzfremden Bestandteile können zum Beispiel größer als 1 ppm (vorzugsweise größer als 10 ppm oder sogar größer als 100 ppm) Küpenfarbstoffe (und deren Zersetzungskompnenten, zum Beispiel Indigo oder Isatin), Polyester, TiO₂, optische Aufheller, etc., aufweisen.

Ein gemäß einem exemplarischen Ausführungsbeispiel hergestellter Formkörper 102 oder ein daraus hergestelltes Produkt kann zum Beispiel für eine oder mehrere der folgenden Anwendungen eingesetzt werden:
a) Zellstoff mit Polymeranteil: dies erlaubt eine Erhitzung des Produktes während seiner Herstellung oder seiner Lebensdauer auf über 130°C, bevorzugt über 150°C, besonders bevorzugt über 180°C.
b) Zellstoff mit TiO₂: dies erlaubt eine Anwendung mit einer Anforderung an Sonnenschutz und/oder Lichtundurchlässigkeit und/oder Sichtschutz
c) Zellstoff mit Anteilen oder Zersetzungselementen von Küpenfarbstoffen: dies erlaubt die Bereitstellung von Denim-artigen Textilprodukten
d) Zellstoff mit Rezyklatanteilen aus einem Lyocell-Verfahren: dies erlaubt das Herstellen von Formkörpern 102 und Produkten mit Lyocell-typischen Eigenschaften
e) Zellstoff mit Rezyklatanteilen, die optische Aufheller enthalten: dies erlaubt das Herstellen von Produkten mit einem hohen Weisswert
f) Zellstoff mit biociden Rezyklatanteilen: dies erlaubt das Herstellen von Formkörpern 102 bzw. von Produkten mit einer biociden Funktion

Gemäß einem exemplarischen Ausführungsbeispiel der Erfindung kann der genannte Zellstoff für einen Lyocellprozess verwendet werden und/oder daraus ein Lyocell-Formkörper 102 hergestellt werden.

Gemäß einem exemplarischen Ausführungsbeispiel kann der Rezyklatanteil an anorganischen Stoffen über 10 ppm, insbesondere über 100 ppm, liegen.

Gemäß einem exemplarischen Ausführungsbeispiel kann der Rezyklatanteil an zellstofffremden Stoffen über 100 ppm, insbesondere über 1000 ppm, liegen.

Gemäß einem exemplarischen Ausführungsbeispiel können zellstofffremde organische Stoffe mehr als 3 Gewichtsprozent des Rezyklatanteils ausmachen und im Zellstoff eingebettet werden.

**Figur 3** zeigt eine mittels eines Lyocell-Verfahrens hergestellte Cellulosefaser 200 im Querschnitt. Die mittels eines Lyocell-Verfahrens hergestellte Cellulosefaser 200 hat eine glatte runde Außenfläche 202 und ist homogen und frei von makroskopischen Löchern mit Cellulosematerial ausgefüllt. Sie kann daher von einem Fachmann eindeutig von mittels eines Viskoseverfahrens hergestellten Cellulosefasern (siehe Bezugszeichen 204 in Figur 4) und von Cellulosefasern aus Baumwollpflanzen (siehe Bezugszeichen 206 in Figur 5) unterschieden werden.

**Figur 4** zeigt eine mittels eines Viskoseverfahrens hergestellte Cellulosefaser 204 im Querschnitt. Die Cellulosefaser 204 ist wolkenförmig und weist entlang ihres äußeren Umfangs eine Mehrzahl von bogenförmigen Strukturen 208 auf.

**Figur 5** zeigt eine natürliche Cellulosefaser 206 aus einer Baumwollpflanze im Querschnitt. Die Cellulosefaser 206 ist nierenförmig und weist im Inneren ein materialfreies Lumen 210 als vollumfänglich umschlossenen Hohlraum auf.

Anhand der signifikanten geometrischen bzw. strukturellen Unterschiede der Fasern gemäß Figur 3 bis Figur 5 ist es einem Fachmann möglich, zum Beispiel unter einem Mikroskop unzweideutig zu ermitteln, ob eine Cellulosefaser mittels des Lyocell-Verfahrens, mittels des Viskoseverfahrens oder natürlich in einer Baumwollpflanze gebildet worden ist.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Verfahren zum Herstellen eines regenerierten cellulosischen Formkörpers (102), wobei das Verfahren aufweist:
Zuführen (52) eines Ausgangsstoffs (110), der Cellulose und mindestens einen Fremdstoff aufweist;
Überführen von mindestens einem Teil des Ausgangsstoffs (110) mit mindestens einem Teil des mindestens einen Fremdstoffs in eine Spinnmasse, die zusätzlich ein Lösungsmittel (116) zum Lösen (54) mindestens eines Teils der Cellulose des Ausgangsstoffs (110) in dem Lösungsmittel (116) enthält;
Einstellen einer gewünschten Restkonzentration des mindestens einen Fremdstoffs in dem Formkörper (102) zum Erzielen einer Funktion des mindestens einen Fremdstoffs in dem Formkörper (102),
wobei das Einstellen ein teilweises Entfernen von mindestens einem des mindestens einen Fremdstoffs durch Abtrennen eines Teils des mindestens einen Fremdstoffs von der Cellulose des Ausgangsstoffs (110) aufweist;
Extrudieren (70) der Spinnmasse zu dem Formkörper (102) und nachfolgendes Ausfällen (56) in einem Spinnbad (191), wodurch der Formkörper (102) erhalten wird, wobei der Formkörper (102) Cellulose und mindestens einen Teil des mindestens einen Fremdstoffs aufweist;
wobei der in dem Formkörper (102) befindliche mindestens eine Fremdstoff einen Anteil von mindestens 0,01 Gewichtsprozent bezogen auf das Gesamtgewicht des Formkörpers (102) hat.

2. Verfahren gemäß Anspruch 1, wobei das Verfahren das teilweise Entfernen (58) von mindestens einem des mindestens einen Fremdstoffs durch Abtrennen eines Teils des mindestens einen Fremdstoffs von der Cellulose des Ausgangsstoffs (110) vor dem Ausfällen (56), insbesondere vor dem Lösen (54), aufweist.

3. Verfahren gemäß Anspruch 1 oder 2, wobei der Ausgangsstoff (110) eine wiederzuverwertende Cellulosequelle (154) aufweist oder daraus besteht, insbesondere ganz oder teilweise aus Resten aus einer Kleidungsherstellung und/oder aus, insbesondere von einem Verbraucher getragenen, Altkleidern gebildet ist.

4. Verfahren gemäß einem der Ansprüche 1 bis 3, wobei der mindestens eine Fremdstoff mindestens einen aus einer Gruppe aufweist, die besteht aus einem Farbstoff, einem optischen Aufheller, einem Mattierungsmittel, insbesondere Titandioxid, und einem antimikrobiellen Stoff, insbesondere Zinkoxid.

5. Verfahren gemäß einem der Ansprüche 1 bis 4, wobei der mindestens eine Fremdstoff Elastan aufweist, das während des Lösens (54) der Cellulose ebenfalls mindestens teilweise gelöst wird.

6. Verfahren gemäß einem der Ansprüche 1 bis 5, wobei der mindestens eine Fremdstoff Polyester aufweist, das mindestens teilweise in dem Ausgangsstoff (110) belassen wird, wenn der Ausgangsstoff (110) mindestens teilweise gelöst (54), insbesondere ausgefällt (56), wird.

7. Verfahren gemäß einem der Ansprüche 1 bis 6, wobei das Verfahren ein mindestens teilweises Entfernen (60) nicht-cellulosischer Fasern aus dem Ausgangsstoff (110) vor dem Ausfällen (56), insbesondere vor dem Lösen (54), aufweist.

8. Verfahren gemäß einem der Ansprüche 1 bis 7, wobei das Verfahren ein mindestens teilweises, insbesondere ein vollständiges, Entfernen (62) von Metallen aus dem Ausgangsstoff (110), aufweist.

9. Verfahren gemäß einem der Ansprüche 1 bis 8, wobei bei dem Verfahren der regenerierte cellulosische Formkörper (102) ohne Durchführung einer Bleichprozedur hergestellt wird.

10. Verfahren gemäß einem der Ansprüche 1 bis 9, wobei vor dem Lösen (54) der Ausgangsstoff (110) in mehrere Farbgruppen farblich vorsortiert (64) wird und jeweils nur vorsortierter Ausgangsstoff (110) einer gemeinsamen Farbgruppe gelöst (54) wird.

11. Verfahren gemäß einem der Ansprüche 1 bis 10, wobei der in dem Formkörper (102) befindliche mindestens eine Fremdstoff einen Anteil von mindestens 0,1 Gewichtsprozent, insbesondere mindestens 1 Gewichtsprozent, bezogen auf das Gesamtgewicht des Formkörpers (102) hat.

12. Verfahren gemäß einem der Ansprüche 1 bis 11, wobei als Formkörper (102) einer aus einer Gruppe hergestellt wird, die besteht aus Fasern, Folien, Schwämmen oder Kugeln.

13. Verfahren gemäß einem der Ansprüche 1 bis 12, aufweisend zumindest eines der folgenden Merkmale:
wobei das Ausfällen (56) durch ein Verdünnen des in der Spinnmasse gelösten Ausgangsstoffs (110) durch ein wässriges Milieu in dem Spinnbad (191) bewirkt wird, insbesondere in einem Wasserbad, weiter insbesondere im Wesentlichen bestehend aus Wasser oder einer Mischung aus Wasser und Lösungsmittel (116);
wobei das Verfahren ein Zerkleinern (66), insbesondere ein mechanisches Zerkleinern, weiter insbesondere ein Schreddern, des Ausgangsstoffs (110) vor dem Lösen (54) des Ausgangsstoffs (110) in dem Lösungsmittel (116) aufweist;
wobei der Ausgangsstoff (110) vor seinem Ausfällen (56), insbesondere vor seinem Lösen (54), mindestens teilweise von Fasern des Ausgangsstoffs (110) vernetzenden Vernetzern befreit wird, insbesondere mittels einer alkalischen und/oder einer sauren Vorbehandlung;
wobei der Ausgangsstoff (110) vor seinem Ausfällen (56), insbesondere vor seinem Lösen (54) in dem Lösungsmittel (116), mit einer anderen Cellulosequelle (156) versetzt wird, wobei insbesondere die andere Cellulosequelle (156) mindestens ein Material aus einer Gruppe aufweist, die besteht aus Holzzellstoff, Hadernzellstoff, Baumwolle, mittels eines Lyocell-Verfahrens hergestellter Cellulose und mittels eines Viskoseverfahrens hergestellter Cellulose;
wobei das Verfahren ein Nachbearbeiten (74) des ausgefällten Formkörpers (102) aufweist;
wobei das Lösen (54) des Ausgangsstoffs (110) mittels eines Direktlöseverfahrens und/oder mittels tertiärer Aminoxide, insbesondere N-Methylmorpholin-N-oxid, als Lösungsmittel (116) erfolgt;
wobei das Verfahren derart durchgeführt wird, dass basierend auf einem Steuerkommando eine Menge des in dem hergestellten Formkörper (102) verbleibenden mindestens einen Fremdstoffs benutzerdefiniert eingestellt wird, insbesondere höher als ein prozesstechnisch erreichbarer Minimalwert eines jeweiligen Fremdstoffs eingestellt wird;
wobei die Cellulose und der mindestens eine Fremdstoff des Ausgangsstoffs (110) beim Zuführen (52), insbesondere beim Überführen, in einem gemeinsamen Festkörperverbund vorliegen, insbesondere in zumindest einem aus einer Gruppe, die besteht aus einem textilen Flächengebilde, einem Faserverbund und einem Formkörperverbund;
wobei das Verfahren ein Weiterverarbeiten hergestellter Formkörper (102) zu einem Produkt, insbesondere zu einem textilen Flächengebilde, aufweist.

14. Verwendung eines Cellulose und mindestens einen Fremdstoff aufweisenden Ausgangsstoffs (110), in welchem die Cellulose und der mindestens eine Fremdstoff beim Zuführen (52) in einem gemeinsamen Festkörperverbund vorliegen, zum Herstellen eines regenerierten cellulosischen Formkörpers (102) mittels des Lyocell-Verfahrens, wobei der mindestens eine Fremdstoff vor einem Lösen (54) von der Cellulose des Ausgangsstoffs (110) teilweise entfernt wird, wobei der Formkörper (102) Cellulose und mindestens einen Teil des mindestens einen Fremdstoffs enthält, und wobei der mindestens eine Fremdstoff in dem Formkörper (102) verwendet wird, um den Formkörper (102) mit einer Funktion des mindestens einen Fremdstoffs auszustatten, wobei der in dem Formkörper (102) befindliche mindestens eine Fremdstoff einen Anteil von mindestens 0,01 Gewichtsprozent bezogen auf das Gesamtgewicht des Formkörpers (102) hat.

15. Verwendung gemäß Anspruch 14, aufweisend mindestens eines der folgenden Merkmale:
wobei als Fremdstoff Elastan verwendet wird, um dem hergestellten Formkörper (102) Elastizität zu verleihen;
wobei als Fremdstoff Polyester verwendet wird, um dem Formkörper (102) thermoplastische Verformbarkeit und/oder erhöhte mechanische Stabilität zu verleihen.

## Claims

1. A method for producing a regenerated cellulosic molded body (102), wherein the method comprises:
supplying (52) a starting material (110) comprising cellulose and at least one foreign material;
converting at least a portion of the starting material (110) with at least a portion of the at least one foreign material into a spinning mass additionally containing a solvent (116) for dissolving (54) at least a part of the cellulose of the starting material (110) in the solvent (116);
adjusting a desired residual concentration of the at least one foreign material in the molded body (102) to achieve a function of the at least one foreign material in the molded body (102),
wherein the adjusting comprises partially removing at least one of the at least one foreign material by separating a part of the at least one foreign material from the cellulose of the starting material (110);
extruding (70) the spinning mass into the molded body (102) and subsequently precipitating (56) in a spinning bath (191), thereby obtaining the molded body (102), wherein the molded body (102) comprises cellulose and at least a part of the at least one foreign material;
wherein the at least one foreign material present in the molded body (102) has a portion of at least 0.01 weight percent with respect to the total weight of the molded body (102).

2. The method according to claim 1, wherein the method comprises partially removing (58) at least one of the at least one foreign material by separating a part of the at least one foreign material from the cellulose of the starting material (110) before the precipitating (56), in particular before the dissolving (54).

3. The method according to claim 1 or 2, wherein the starting material (110) comprises or consists of a cellulose source (154) to be recycled, in particular is formed entirely or partially from residues from clothing production and/or from used clothes, in particular worn by a consumer.

4. The method according to any one of the claims 1 to 3, wherein the at least one foreign material comprises at least one from a group consisting of a dye, an optical brightener, a matting agent, in particular titanium dioxide, and an antimicrobial substance, in particular zinc oxide.

5. The method according to any one of the claims 1 to 4, wherein the at least one foreign material comprises elastane, which is also at least partially dissolved during the dissolving (54) of the cellulose.

6. The method according to any one of the claims 1 to 5, wherein the at least one foreign material comprises polyester, which is at least partially left in the starting material (110) when the starting material (110) is at least partially dissolved (54), in particular precipitated (56).

7. The method according to any one of the claims 1 to 6, wherein the method comprises at least partially removing (60) non-cellulosic fibers from the starting material (110) before the precipitating (56), in particular before the dissolving (54).

8. The method according to any one of the claims 1 to 7, wherein the method comprises at least partially, in particular completely, removing (62) metals from the starting material (110).

9. The method according to any one of the claims 1 to 8, wherein in the method the regenerated cellulosic molded body (102) is produced without carrying out a bleaching procedure.

10. The method according to any one of the claims 1 to 9, wherein before the dissolving (54) the starting material (110) is pre-sorted (64) in color into a plurality of color groups and respectively only pre-sorted starting material (110) of a common color group is dissolved (54).

11. The method according to any one of the claims 1 to 10, wherein the at least one foreign material present in the molded body (102) has a portion of at least 0.1 weight percent, in particular at least 1 weight percent, with respect to the total weight of the molded body (102).

12. The method according to any one of the claims 1 to 11, wherein one from a group consisting of fibers, films, sponges or spheres is produced as the molded body (102).

13. The method according to any one of the claims 1 to 12, comprising at least one of the following features:
wherein the precipitating (56) is effected by diluting the starting material (110) dissolved in the spinning mass by an aqueous milieu in the spinning bath (191), in particular in a water bath, further in particular substantially consisting of water or a mixture of water and solvent (116);
wherein the method comprises comminuting (66), in particular mechanically comminuting, further in particular shredding, the starting material (110) before the dissolving (54) of the starting material (110) in the solvent (116);
wherein the starting material (110) is at least partially freed from cross-linking agents cross-linking fibers of the starting material (110) before its precipitating (56), in particular before its dissolving (54), in particular by means of an alkaline and/or an acidic pre-treatment;
wherein another cellulose source (156) is added to the starting material (110) before its precipitating (56), in particular before its dissolving (54) in the solvent (116), wherein in particular the other cellulose source (156) comprises at least one material from a group consisting of wood pulp, hader pulp, cotton, cellulose produced by means of a lyocell method and cellulose produced by means of a viscose method;
wherein the method comprises post-processing (74) the precipitated molded body (102);
wherein the dissolving (54) of the starting material (110) is effected by means of a direct dissolving method and/or by means of tertiary amine oxides, in particular N-methylmorpholine-N-oxide, as solvent (116);
wherein the method is carried out in such a way that, based on a control command, an amount of the at least one foreign material remaining in the produced molded body (102) is adjusted in a user-defined manner, in particular is adjusted higher than a minimum value of a respective foreign material that can be achieved in terms of process technology;
wherein the cellulose and the at least one foreign material of the starting material (110) are present in a common solid body composite during the supplying (52), in particular during the converting, in particular in at least one from a group consisting of a textile fabric, a fiber composite and a molded body composite;
wherein the method comprises further processing produced molded bodies (102) to form a product, in particular to form a textile fabric.

14. Use of a starting material (110) comprising cellulose and at least one foreign material, in which the cellulose and the at least one foreign material are present in a common solid body composite during the supplying (52), for producing a regenerated cellulosic molded body (102) by means of the Lyocell method, wherein the at least one foreign material is partially removed from the cellulose of the starting material (110) before a dissolving (54), wherein the molded body (102) contains cellulose and at least a part of the at least one foreign material, and wherein the at least one foreign material is used in the molded body (102) in order to equip the molded body (102) with a function of the at least one foreign material,
wherein the at least one foreign material present in the molded body (102) has a portion of at least 0.01 weight percent with respect to the total weight of the molded body (102).

15. The use according to claim 14, comprising at least one of the following features:
wherein elastane is used as the foreign material in order to impart elasticity to the produced molded body (102);
wherein polyester is used as the foreign material in order to impart thermoplastic deformability and/or increased mechanical stability to the molded body (102).

## Revendications

1. Procédé de production d'un corps moulé cellulosique (102) régénéré, dans lequel le procédé comprend les étapes consistant à :
alimenter (52) une matière première (110) contenant de la cellulose et au moins une matière étrangère ;
transférer au moins une partie de la matière première (110) avec au moins une partie de la matière étrangère dans une masse de filage qui contient de manière supplémentaire un solvant (116) permettant de dissoudre (54) au moins une partie de la cellulose de la matière première (110) dans le solvant (116) ;
ajuster une concentration résiduelle souhaitée d'au moins une matière étrangère dans le corps moulé (102) afin d'obtenir une fonction d'au moins une matière étrangère dans le corps moulé (102),
dans lequel l'ajustement présente une étape consistant à éliminer partiellement d'au moins l'une des au moins une matière étrangère en séparant une partie de la ou les matières étrangères de la cellulose de la matière première (110) ;
extruder (70) la masse de filage pour donner le corps moulé (102) et précipiter (56) ensuite dans un bain de filage (191), ce qui permet d'obtenir le corps moulé (102), dans lequel le corps moulé (102) contient de la cellulose et au moins une partie de la ou des matières étrangères ;
dans lequel la ou les matières étrangères présentes dans le corps moulé (102) ont une proportion d'au moins 0,01 % en poids par rapport au poids total du corps moulé (102).

2. Procédé selon la revendication 1, dans lequel le procédé présente une étape consistant à éliminer (58) partiellement d'au moins une matière étrangère en séparant une partie de la matière étrangère de la cellulose de la matière première (110) avant la précipitation (56), en particulier avant la dissolution (54).

3. Procédé selon la revendication 1 ou 2, dans lequel la matière première (110) présente une source de cellulose (154) à recycler ou est constituée de celle-ci, en particulier est formée entièrement ou partiellement de résidus d'une production de vêtements et/ou de vêtements usagés, en particulier portés par un consommateur.

4. Procédé selon l'une quelconque des revendications 1 à 3, dans lequel la ou les matières étrangères comprennent au moins une matière choisie dans le groupe constitué d'un colorant, d'un azurant optique, d'un agent matifiant, en particulier du dioxyde de titane, et d'une matière antimicrobienne, en particulier de l'oxyde de zinc.

5. Procédé selon l'une quelconque des revendications 1 à 4, dans lequel la ou les matières étrangères comprennent de l'élasthanne qui est également au moins partiellement dissous pendant la dissolution (54) de la cellulose.

6. Procédé selon l'une quelconque des revendications 1 à 5, dans lequel la ou les matières étrangères comprennent du polyester qui est laissé au moins partiellement dans la matière première (110) lorsque la matière première (110) est au moins partiellement dissoute (54), en particulier précipitée (56).

7. Procédé selon l'une quelconque des revendications 1 à 6, dans lequel le procédé comprend une étape consistant à éliminer (60) au moins partiellement des fibres non cellulosiques à partir de la matière première (110) avant la précipitation (56), en particulier avant la dissolution (54).

8. Procédé selon l'une quelconque des revendications 1 à 7, dans lequel le procédé comprend une étape consistant à éliminer (62) au moins partiellement, en particulier complètement, des métaux à partir de la matière première (110).

9. Procédé selon l'une quelconque des revendications 1 à 8, dans lequel le corps moulé cellulosique (102) régénéré est produit grâce au dit procédé sans mettre en œuvre de procédure de blanchiment.

10. Procédé selon l'une quelconque des revendications 1 à 9, dans lequel, avant la dissolution (54), la matière première (110) est pré-triée par couleur en plusieurs groupes de couleurs (64) et seule la matière première (110) pré-triée respective d'un groupe de couleurs commun est dissoute (54).

11. Procédé selon l'une quelconque des revendications 1 à 10, dans lequel la ou les matières étrangères comprises dans le corps moulé (102) présentent une proportion d'au moins 0,1 % en poids, en particulier d'au moins 1 % en poids, par rapport au poids total du corps moulé (102).

12. Procédé selon l'une quelconque des revendications 1 à 11, dans lequel le corps moulé (102) produit est un corps moulé issu du groupe constitué des fibres, des films, des éponges ou des billes.

13. Procédé selon l'une quelconque des revendications 1 à 12, présentant au moins une des caractéristiques ci-dessous :
dans laquelle la précipitation (56) est provoquée dans le bain de filage (191), en particulier dans un bain d'eau, en particulier et de manière supplémentaire essentiellement constitué d'eau ou d'un mélange d'eau et de solvant (116), par une dilution, grâce à un milieu aqueux, de la matière première (110) dissoute dans la masse de filage ;
dans lequel le procédé comprend une étape consistant à broyer (66), en particulier à broyer mécaniquement, en particulier et de manière supplémentaire à déchiqueter, la matière première (110) avant la dissolution (54) de la matière première (110) dans le solvant (116) ;
dans lequel la matière première (110), avant sa précipitation (56), en particulier avant sa dissolution (54), est au moins partiellement débarrassée des agents de réticulation qui réticulent les fibres de la matière première (110), en particulier au moyen d'un prétraitement alcalin et/ou acide ;
dans lequel la matière première (110) est mélangée à une autre source de cellulose (156) avant sa précipitation (56), en particulier avant sa dissolution (54) dans le solvant (116), dans lequel l'autre source de cellulose (156) comprend en particulier au moins une matière issue du groupe constitué de la pâte de bois, de la pulpe de chiffon, du coton, de la cellulose produite grâce à un procédé Lyocell et de la cellulose produite grâce à un procédé viscose ;
dans lequel le procédé comprend une étape consistant à post-traiter (74) le corps moulé (102) précipité ;
dans lequel la dissolution (54) de la matière première (110) intervient au moyen d'un procédé de dissolution directe et/ou au moyen d'oxydes d'amines tertiaires, en particulier de N-oxyde de N-méthylmorpholine, faisant office de solvant (116) ;
dans lequel le procédé est mis en œuvre de telle manière que, en se basant sur une instruction de commande, une quantité de la au moins une matière étrangère restante dans le corps moulé (102) produit est ajustée de manière définie par un utilisateur, en particulier de manière à être supérieure à une valeur minimale, pouvant être obtenue par la technique antérieure, d'une matière étrangère respective ;
dans lequel la cellulose et la au moins une matière étrangère de la matière première (110) sont présentes dans un composite solide commun lors de l'alimentation (52), en particulier lors du transfert, en particulier dans au moins un élément du groupe constitué d'une structure textile, d'un composite de fibres et d'un composite de corps moulé ;
dans lequel le procédé comprend une étape consistant à traiter ultérieurement des corps moulés (102) produits, afin d'obtenir un produit, en particulier afin d'obtenir une structure textile.

14. Utilisation d'une matière première (110) contenant de la cellulose et au moins une matière étrangère au sein de laquelle la cellulose et la ou les matières étrangères sont présentes dans un composite solide commun lors de l'alimentation (52), en vue de la production, au moyen du procédé Lyocell, d'un corps moulé (102) cellulosique régénéré, dans laquelle au moins une matière étrangère est partiellement éliminée de la cellulose de la matière première (110) avant la dissolution (54), dans laquelle le corps moulé (102) contient de la cellulose et au moins une partie de la matière étrangère, et dans laquelle la matière étrangère est utilisée dans le corps moulé (102) afin de doter le corps moulé (102) d'une fonction de la matière étrangère, dans lequel la matière étrangère est présente dans le corps moulé (102) dans une proportion d'au moins 0,01 % en poids par rapport au poids total du corps moulé (102).

15. Utilisation selon la revendication 14, présentant au moins une des caractéristiques ci-dessous :
de l'élasthanne est utilisé comme matière étrangère pour conférer de l'élasticité au corps moulé (102) produit ;
du polyester est utilisé comme matière étrangère pour conférer une déformabilité thermoplastique et/ou une stabilité mécanique accrue au corps moulé (102).
